# EUROPÄISCHE PATENTSCHRIFT

(11) **EP 2 843 487 B1**
(45) Veröffentlichungstag und Bekanntmachung des Hinweises auf die Patenterteilung: **03.04.2019**
(21) Anmeldenummer: 14181676.9
(22) Anmeldetag: 20.08.2014
(51) Int. Cl.: H04L 29/12, H04L 29/08, H04L 12/26

(54) **MESSGERÄTEZUGANGSVORRICHTUNG, FELDGERÄT UND VERFAHREN ZUM STEUERN DES ZUGANGS ZU EINEM MESSGERÄT**
MEASURING DEVICE ACCESS DEVICE, FIELD DEVICE AND METHOD FOR CONTROLLING ACCESS TO A MEASURING DEVICE
DISPOSITIF D'ACCÈS D'APPAREIL DE MESURE, APPAREIL DE TERRAIN ET PROCÉDÉ DE COMMANDE D'UN ACCÈS À UN APPAREIL DE MESURE

(30) Priorität: 20.08.2013 DE 102013216501
(43) Veröffentlichungstag der Anmeldung: 04.03.2015
(73) Patentinhaber: VEGA Grieshaber KG, 77709 Wolfach (DE)
(72) Erfinder: Allgaier, Volker, 77716 Haslach (DE); Staiger, Holger, 78739 Hardt (DE)
(74) Vertreter: Maiwald Patent- und Rechtsanwaltsgesellschaft mbH

(56) Entgegenhaltungen:
- WO-A1-00/04427
- WO-A1-03/025747
- WO-A1-2007/012074
- WO-A2-2008/120120
- US-A1- 2011 228 725
- US-A1- 2013 007 112
- US-B1- 7 606 890

## Beschreibung

### Bezugnahme auf verwandte Anmeldungen

Die vorliegende Anmeldung beansprucht die Priorität der deutschen Patentanmeldung Nr. 10 2013 216 501.3, eingereicht am 20. August 2013.

### Technisches Gebiet

Die vorliegende Erfindung betrifft das technische Gebiet der Messtechnik. Insbesondere betrifft die vorliegende Erfindung eine Messgerätezugangsvorrichtung, ein Verfahren zum Steuern des Zugangs zu einem Messgerät und ein Messgerätesystem.

### Hintergrund der Erfindung

Internetfähige Feldgeräte gibt es mit paketorientierten Schnittstellen, um sie in Paketnetzen möglichst flexibel ansprechen zu können. Die Feldgeräte werden verstärkt auch mit drahtlosen Übertragungstechniken oder Funkübertragungstechniken ausgestattet, um den Anschluss an Übertragungsnetze noch flexibler zu machen. Feldgeräte, die drahtlose Übertragungstechniken nutzen werden als Wireless Feldgeräte bezeichnet und setzen drahtlose Datenübertragungstechnologien ein, wie beispielsweise UMTS (Universal Mobile Telecommunications System), GPRS (General Paket Radio Service), HSDPA (High Speed Downlink Paket Access), LTE (Long Term Evolution) oder WLAN (Wireless Local Area Network). Mittels der drahtlosen Technologie oder Funktechnologie ist es möglich, über eine Funkstrecke mit einem Feldgerät zu kommunizieren, an dieses Befehle abzusetzen oder auch Messergebnisse von dem Feldgerät abzufragen. Diese Feldgeräte, insbesondere diese Wireless Feldgeräte, stellen in der Regel selbstständig Verbindungen zu anderen Systemen her. Die Feldgeräte sind dabei so eingestellt, dass sie basierend auf diversen Regeln Verbindungen zu anderen Systemen oder Empfängern herstellen können, um mit diesen die gewünschten Daten auszutauschen. Die Regeln können eingestellt werden und beliebig angepasst werden.

Die Verbindungen zu anderen Systemen können Verbindungen zu Servern jeglicher Art sein. Die Wireless Feldgeräte können beispielsweise eine Verbindung zu einem Mailserver, zu einem Datenbankserver oder zu einem FTP (File Transfer Protocol)-Server herstellen. Um eine Verbindung mit einem Empfänger herstellen zu können, sind sowohl der Empfänger als auch das Feldgerät mit einem Netzwerk verbunden. Dieses Netzwerk kann ein öffentliches Netzwerk, beispielsweise das Internet, das öffentliche Festnetz oder das öffentliche Mobilfunknetz oder auch ein entsprechendes privates Netz sein.

Es mag jedoch ein Bedarf bestehen effizienter auf Endgeräte zuzugreifen.

WO 00/04427 beschreibt ein Verfahren und eine Vorrichtung zur Überwachung und Steuerung elektrischer Geräte unter Verwendung eines Webservers, der mit entfernten Slave-Knoten kommunizieren kann.

WO 03/025747 A1 beschreibt ein Verfahren für einen Industrieroboter, der einen Manipulator und ein Steuersystem mit einem Prozessor und einem Computerprogramm aufweist, welches den Prozessor beeinflusst und zur Steuerung eines Prozesses ausgeführt ist, wobei das Computerprogramm eine Vielzahl an miteinander kooperierender Objekte zur Adressierung der Objekte aufweist.

US 7,606,890 B1 beschreibt ein Verfahren und ein System zur Erleichterung des Managements von "namespace" in einer industriellen Steuerungsumgebung.

WO 2008/120120 A2 beschreibt ein Netzwerksteuerungssystem mit einer Vielzahl an Einrichtungen, die an das Netzwerk angeschlossen sind.

### Zusammenfassung der Erfindung

Die Erfindung wird von den Merkmalen der unabhängigen Patentansprüche beschrieben. Weiterbildungen der Erfindung sind in den Unteransprüchen angegeben.

Demgemäß werden eine Messgerätezugangsvorrichtung, ein Verfahren zum Steuern des Zugangs zu einem Messgerät, ein Feldgerät und eine Vermittlungstelleneinrichtung beschrieben.

Gemäß einem Aspekt der vorliegenden Erfindung wird eine Messgerätezugangsvorrichtung beschrieben. Die Messgerätezugangsvorrichtung steuert im Wesentlichen den Zugang zu Feldgeräten, welche sich an einem im Wesentlichen privaten oder internen Netz befinden. Die Messgerätezugangsvorrichtung weist eine externe Datenschnittstelle auf, um die Messgerätezugangsvorrichtung mit einem öffentlichen Netz zu verbinden. In einem Beispiel ist das öffentliche Netz ein öffentliches Datennetz, beispielsweise das Internet, oder ein öffentliches Sprachnetz. Ferner weist die Messgerätezugangsvorrichtung eine interne Datenschnittstelle auf, um sich mit einem privaten Netz zu verbinden. Darüber hinaus weist die Messgerätezugangsvorrichtung eine Datenbank, eine Verwaltungseinrichtung und eine Koppeleinrichtung auf.

Die externe Datenschnittstelle ist eingerichtet ein Datenpaket zu empfangen und aus dem empfangenen Datenpaket eine externe Adressinformation und eine Befehlsinformation zu extrahieren, die mit dem Paket verschickt wurde oder über eine Eingabemaske eingegeben wurde, und die extrahierten Informationen an die Verwaltungseinrichtung weiterzuleiten. In einem Beispiel sind die externe Datenschnittstelle und/oder die interne Datenschnittstelle eine MAU (Medium Attachment Unit) die einen Protokollstack aufweist. Als interne Datenschnittstelle mag aber auch ein internes Netz mit Verwaltungseinrichtung bezeichnet werden, die den Zugang der Feldgeräte zum privaten Netz organisiert.

Die Verwaltungseinrichtung ist eingerichtet ein Feldgerätemerkmal einer an der internen Datenschnittstelle angeschlossenen Feldgeräteeinrichtung, eines Messgerätes oder eines Sensors aus der externen Adressinformation zu extrahieren. Ferner ist die Verwaltungseinrichtung eingerichtet, mittels einer Abfrage der Datenbank zu prüfen, ob die Befehlsinformation an die Feldgeräteeinrichtung weitergeleitet werden soll oder weitergeleitet werden darf, welche an der internen Datenschnittstelle angeschlossen ist. Die Verwaltungseinrichtung ist ferner eingerichtet, das Feldgerätemerkmal in eine interne Adressinformation der Feldgeräteeinrichtung zu übersetzen. Das Feldgerätemerkmal ist eine feste Kennung der angeschlossenen Feldgeräteeinrichtung, welche im Wesentlichen mit der Feldgeräteeinrichtung verbunden ist und welche es erlaubt, die angeschlossene Feldgeräteeinrichtung von anderen Feldgeräteeinrichtungen zu unterscheiden. Das Feldgerätemerkmal mag im Wesentlichen unveränderlich mit der Feldgeräteeinrichtung, mit dem Sensor oder dem Messgerät verbunden sein. Das Feldgerätemerkmal mag sozusagen in das Feldgerät "eingebrannt" sein, d. h. in einer Firmware der Feldgeräteeinrichtung hinterlegt sein oder in einem festen oder speziellen Register der Feldgeräteeinrichtung, an einer standardisierten Stelle oder in einem festgelegten Adressbereich eines Speichers der Feldgeräteeinrichtung abgelegt sein. Das Feldgerätemerkmal kann ein permanentes Feldgerätemerkmal sein, wie beispielsweise eine Seriennummer, das der Feldgeräteeinrichtung beim Herstellprozess im Wesentlichen unveränderbar zugeordnet worden ist. Als Feldgerätemerkmal kann aber auch ein Netzwerkmerkmal, wie eine IMEI (International Mobile Station Equipment Identity), angesehen werden, die dem Feldgerät zwar nicht so lange wie eine Feldgerätemerkmal zugewiesen ist, aber im Wesentlichen quasi-permanent zugeordnet ist. In einem Beispiel mögen das Feldgerätemerkmal und das Netzwerkmerkmal im Vergleich zu einer internen Adressinformation dem Feldgerät über eine längere Zeitdauer zugewiesen sein. So mag das Feldgerätemerkmal und/oder das Netzwerkmerkmal als eine im Wesentlichen eindeutig Kennung für die Feldgeräteeinrichtung genutzt werden, während eine Adressinformation nur temporär eine Feldgeräteeinrichtung bezeichnet.

Das Feldgerätemerkmal mag in einem Beispiel mittels spezifischer Befehle eines Feldgerätebusses aus der Feldgeräteeinrichtung abfragbar sein, beispielsweise mittels eines Befehls aus dem HART Protokoll, wie einem Upload oder einem Download, eines Profibus Protokolls, wie einem Physical Block, einem Transducer Block oder einem Function Block oder eines Fieldbus Foundation Protokolls. Das Feldgerätemerkmal kann aber auch mittels eines Befehls in einer Gerätebeschreibungssprache oder aus einer Bedienoberfläche abgefragt werden, beispielsweise mittels DDL (Device Description Language), DTM (Device Type Manager), FDT (Field Device Type), EDDL (Enhanced DDL). In einem anderen Beispiel mag das Feldgerätemerkmal über eine alphanumerische oder graphische Anzeige abfragbar sein, beispielsweise über eine bestimmte Tastenkombination. In noch einem anderen Beispiel ist nur eine Vielzahl oder eine begrenzte Vielzahl von Feldgerätemerkmalen zugelassen, so dass die Verwaltungseinrichtung beim Extrahieren des Feldgerätemerkmals im Wesentlichen nur nach einem bestimmten Format des Feldgerätemerkmals in der externen Adressinformation suchen muss.

Das Feldgerätemerkmal oder die feste Kennung erlaubt es, die angeschlossene Feldgeräteeinrichtung von anderen Feldgeräteeinrichtungen zu unterscheiden. Diese Unterscheidung mag auf einer anderen Schicht als auf der Netzwerkschicht erfolgen. Die interne Adressinformation der Feldgeräteeinrichtung mag eine Kennung oder ein Kennzeichen für den Ort sein, an welchem sich die Feldgeräteeinrichtung an der internen Datenschnittstelle befindet oder eine Kennung, unter der die Feldgeräteeinrichtung in einem Kommunikationsnetz ansprechbar ist. Die interne Adressinformation mag die Feldgeräteeinrichtung auf einer Netzwerkschicht des OSI Modells kennzeichnen. Die interne Adressinformation oder die Kennung für den Ort mag temporär vergeben sein. D. h. die interne Adressinformation mag im Wesentlichen nur für einen bestimmten Zeitbereich, beispielsweise für die Zeit solange das Feldgerät in Benutzung ist, dem Feldgerät zugeordnet sein. Folglich mag die interne Adressinformation nicht unveränderlich mit der Feldgeräteinrichtung verbunden sein.

Die Koppeleinrichtung ist eingerichtet, die Befehlsinformation, die an die Feldgeräteeinrichtung weitergeleitet werden soll oder darf, über die interne Datenschnittstelle mittels der internen Adressinformation der Feldgeräteeinrichtung an die Feldgeräteeinrichtung weiterzuleiten. Die Feldgeräteeinrichtung ist an der internen Datenschnittstelle angeschlossen.

Das temporäre Vergeben der Kennung mag bedeuten, dass beispielsweise die Kennung nur solange der Feldgeräteeinrichtung zugewiesen ist, solange die Feldgeräteeinrichtung mit dem internen Netz oder dem privaten Netz verbunden ist.

Gemäß einem anderen Aspekt der vorliegenden Erfindung wird ein Verfahren zum Steuern des Zugangs zu einem Messgerät oder zu einer Feldgeräteeinrichtung beschrieben, welches das Empfangen eines Datenpakets über eine externe Datenschnittstelle aufweist. Ferner weist das Verfahren zum Steuern des Zugangs zu einem Messgerät auf, dass eine externe Adressinformation extrahiert wird, beispielsweise aus einem empfangenen externen Datenpaket eines externen Netzes oder eines öffentlichen Netzes. Das Verfahren weist auch das Extrahieren einer Befehlsinformation auf, welche in dem empfangenen Datenpaket enthalten sein mag. Darüber hinaus weist das Verfahren das Extrahieren eines Feldgerätemerkmals einer an einer internen Datenschnittstelle angeschlossenen Feldgeräteeinrichtung auf, wobei das Feldgerätemerkmal aus der ermittelten externen Adressinformation abgeleitet werden mag.

Mittels einer Abfrage einer Datenbank mag dann geprüft werden, ob die Befehlsinformation an die Feldgeräteeinrichtung weitergeleitet werden soll oder darf, welche an der internen Datenschnittstelle angeschlossen ist. Um festzustellen, ob die Befehlsinformation zu der Feldgeräteeinrichtung weitergeleitet werden soll, mag, beispielsweise mittels einer Messgerätezugangsvorrichtung, festgestellt werden ob in dem privaten Netz eine Feldgeräteeinrichtung vorhanden ist, die zu der extrahierten Adressinformation gehört, insbesondere zu dem extrahierten Feldgerätemerkmal.

Ferner mag in dem Verfahren zum Steuern des Zugangs zu einem Messgerät vorgesehen sein, dass das Feldgerätemerkmal, welches aus dem empfangenen Datenpaket extrahiert worden ist, in eine interne Adressinformation der Feldgeräteeinrichtung übersetzt wird. Durch das Umsetzen des Feldgerätemerkmals in die interne Adressinformation mag das Feldgerät innerhalb des privaten Netzes kennzeichenbar sein und mittels dieser Adressinformation mag die Feldgeräteeinrichtung in dem privaten Netz erreichbar und ansprechbar sein.

Die Befehlsinformation wird erkannt. Ferner wird erkannt, dass die Befehlsinformation an die Feldgeräteeinrichtung weitergeleitet werden soll. Die Befehlsinformation mag an die Feldgeräteeinrichtung, welche an der internen Datenschnittstelle angeschlossen ist, über die interne Datenschnittstelle mittels der internen Adressinformation der Feldgeräteeinrichtung weitergeleitet werden.

Das Feldgerätemerkmal ist eine feste Kennung der angeschlossenen Feldgeräteeinrichtung, welche mit der Feldgeräteeinrichtung verbunden ist und welche Kennung es erlaubt, die angeschlossene Feldgeräteeinrichtung von anderen Feldgeräteeinrichtungen zu unterscheiden, welche ebenfalls an dem privaten Netz und/oder an der internen Datenschnittstelle angeschlossen sind. Die interne Adressinformation der Feldgeräteeinrichtung ist im Wesentlichen eine Kennung für den Ort, an welchem sich die Feldgeräteeinrichtung an der internen Datenschnittstelle befindet und insbesondere, an welchem Ort die Feldgeräteeinrichtung an der internen Datenschnittstelle angeschlossen ist. Sie dient dazu, die Feldgeräteeinrichtung von anderen Feldgeräteeinrichtungen innerhalb des internen Datennetzes zu unterscheiden. Die Kennung des Ortes der Feldgeräteeinrichtung oder die interne Adressinformation für die Feldgeräteeinrichtung wird temporär vergeben und ist nur vorübergehend vergeben, beispielsweise für die Zeit, die die Feldgeräteeinrichtung im Netz erreichbar ist.

Auf diese Weise mag ein Feldgerätemerkmal derart in eine aktuelle Adressinformation im internen Netz umgesetzt werden, dass die Feldgeräteeinrichtung aus einem öffentlichen Netz ansprechbar ist, indem lediglich zumindest eins seiner ihm individuell zugeordneten Feldgerätemerkmale aus einer externen Adresse extrahiert wird und einer internen Adresse zugeordnet wird.

In einem Beispiel mag die externe Adressinformation, insbesondere ein daraus abgeleitetes Feldgerätemerkmal, zumindest einer der Schichten 5 - 7 des OSI-Referenzmodells (Open Systems Interconnection Model) zugeordnet sein, während die interne Adressinformation der Schicht 3 oder darunter zugeordnet sein mag. Das Feldgerätemerkmal mag auf einer der Schichten 5 - 7 ausgewertet werden und insbesondere auf Schicht 7, der Anwendungsschicht. Eine Vermittlungsstelleneinrichtung mag auf der Netzwerkschicht arbeiten und somit im Wesentlichen Parameter der Schicht 3 und unterhalb von Schicht 3 auswerten. Die Netzwerkmerkmale mögen auf Schicht 3, der Netzwerkschicht, ausgewertet werden. Die Auswertung der Merkmale oder Adressinformationen mag von Protokollen durchgeführt werden, die der jeweiligen Schicht zugeordnet werden. Das Feldgerätemerkmal mag nicht direkt für Routingzwecke einsetzbar sein und keine hierarchische Struktur, wie ein Domainname aufweisen.

Gemäß noch einem anderen Aspekt der vorliegenden Erfindung wird eine Feldgeräteeinrichtung oder ein Feldgerät beschrieben, welche/welches eine Feldgerätemerkmalträgereinrichtung, eine Netzwerkmerkmalträgereinrichtung und eine Steuereinrichtung oder einen Prozessor aufweist. Die Feldgerätemerkmalträgereinrichtung mag eine Einrichtung sein, welche einem Feldgerät, einer Feldgeräteeinrichtung, einem Messgerät oder einem Sensor ein im Wesentlichen unveränderliches Feldgerätemerkmal zuweist. Die Feldgerätemerkmalträgereinrichtung mag im Wesentlichen fest mit dem Feldgerät verbunden sein, in das Feldgerät "eingebrannt" sein oder beispielsweise in einer Firmware des Feldgeräts oder in einem Register eines Speichers der Feldgeräteeinrichtung fest hinterlegt sein. Als Feldgerätemerkmal, welches auf der Feldgerätemerkmalträgereinrichtung hinterlegt ist, mag eine Seriennummer oder eine Herstellernummer des Feldgerätes dienen.

Die Netzwerkmerkmalträgereinrichtung mag eine Kennung der Feldgeräteeinrichtung innerhalb eines Datennetzes sein. Die Netzwerkmerkmalträgereinrichtung mag einem Feldgerät temporär zugewiesen werden, indem die Netzwerkmerkmalträgereinrichtung beispielsweise in oder auf dem Feldgerät temporär installiert wird. Zum temporären Installieren mag die Netzwerkmerkmalträgereinrichtung lösbar oder steckbar ausgeführt sein. Beispielsweise kann einem Feldgerät eine SIM-Karte eines Mobilfunkbetreibers als Netzwerkmerkmalträgereinrichtung zugewiesen werden. In einem anderen Beispiel mag dem Feldgerät auch eine Funkeinheit zugeordnet sein, beispielsweise eine GSM-Einheit, und dem Feldgerät, insbesondere der Funkeinheit, mag eine IMEI zugeordnet sein.

Eine SIM-Karte weist zumindest ein Netzwerkmerkmal auf. Das Netzwerkmerkmal mag von dem Netz oder von einer Komponente des Netzes mit einer internen Adresse verknüpft werden. Ein Netzwerkmerkmal, welches auf einer Netzwerkmerkmalträgereinrichtung hinterlegt ist, mag eine IMEI oder eine ICCID (Integrated Circuit Card Identifier) sein. Ein Netzwerkmerkmal mag es jedoch nicht erlauben, den Ort eines Feldgerätes innerhalb eines Netzwerkes zu bestimmen, sondern lediglich eine individuelle und eindeutige Kennung innerhalb eines Netzwerkes zur Verfügung zu stellen.

Die Feldgeräteeinrichtung mag ferner eine Kommunikationseinrichtung aufweisen, welche zum Kommunizieren mit einem Datennetz eingerichtet ist und beispielsweise die Protokolle des Datennetzes unterstützt.

Die Steuereinrichtung ist eingerichtet, das Einschalten eines Feldgerätes zu erkennen. Ein Einschalten eines Feldgerätes mag beispielsweise dadurch erkannt werden, dass eine Spannungsversorgung an das Feldgerät angelegt wird und eine Versorgungsspannung einen bestimmten Spannungswert übersteigt. Wenn die Steuereinrichtung das Einschalten oder einen eingeschalteten Zustand der Feldgeräteeinrichtung erkennt, liest die Steuereinrichtung die Netzwerkmerkmalkennung oder das Netzwerkmerkmal aus der Netzwerkmerkmalträgereinrichtung aus und leitet das Netzwerkmerkmal über die Kommunikationseinrichtung an eine Vermittlungsstelleneinrichtung des Datennetzes oder des Kommunikationsnetzes weiter.

Gemäße einem anderen Aspekt der vorliegenden Erfindung wird eine Vermittlungsstelleneinrichtung beschrieben, die eine Registriereinrichtung, eine interne Datenschnittstelle zum Verbinden mit einem privaten Netz und eine Zugangsschnittstelle zum Annehmen von einer Verbindungsanfrage von einer Feldgeräteeinrichtung aufweist. Ferner weist die Vermittlungsstelleneinrichtung eine Übertragungsmodusumschalteeinrichtung auf.

Die Registriereinrichtung ist eingerichtet, ein Netzwerkmerkmal von einer Feldgeräteeinrichtung entgegenzunehmen und eine Verknüpfung zwischen dem Netzwerkmerkmal und einer internen Adressinformation herzustellen. Die Übertragungsmodusumschalteeinrichtung ist eingerichtet, einen Umschaltbefehl zu erhalten und entsprechend dem Umschaltebefehl einen Paketübertragungsmodus der Vermittlungsstelleneinrichtung einzuschalten und/oder auszuschalten.

In einem anderen Beispiel, mag die Übertragungsmodusumschalteeinrichtung eingerichtet sein, festzulegen, ob eine von der Registriereinrichtung für eine Feldgeräteeinrichtung und insbesondere für eine Netzwerkmerkmalträgereinrichtung der Feldgeräteeinrichtung zugewiesene Adressinformation außerhalb der Vermittlungsstelleneinrichtung veröffentlicht wird.

Bei der Zugangsschnittstelle mag es sich um eine Schnittstelle zu einem drahtgebundenen oder drahtlosen Kommunikationsnetz handeln. Die Zugangsschnittstelle mag beispielsweise eine Luftschnittstelle eines Mobilfunknetzes sein.

Über die Zugangsschnittstelle kann eine externe Steuereinrichtung, beispielsweise eine Messgerätezugangsvorrichtung, auf die Vermittlungsstelleneinrichtung zugreifen und einen Paketübertragungsmodus einstellen. In einem Beispiel mag die Vermittlungsstelleneinrichtung eine APN Einrichtung sein, welche die Zugangsschnittstelle aufweist. Der Paketmodus kann über spezielle Befehle oder aber auch über eine Bedienkonsole eingestellt werden.

Die Vermittlungsstelleneinrichtung des Datennetzes mag eine Verwaltungseinrichtung des Datennetzes sein, welche mittels des Netzwerkmerkmals unterschiedliche Netzwerkmerkmalträgereinrichtungen, SIM-Karten und somit auch Feldgeräteeinrichtungen, welche eine entsprechende Netzwerkmerkmalsträgereinrichtung aufweisen, innerhalb des internen Netzwerkes unterscheiden kann. Die Steuereinrichtung ist ferner eingerichtet, wenn sie das Einschalten des Feldgeräts erkennt, ein Feldgerätemerkmal aus der Feldgerätemerkmalträgereinrichtung auszulesen und über die Kommunikationseinrichtung an die erfindungsgemäße Messgerätezugangsvorrichtung und/oder an die Vermittlungsstelleneinrichtung des Datennetzes weiterzuleiten.

Die Feldgerätemerkmalträgereinrichtung und die Netzwerkmerkmalträgereinrichtung mögen in einem Beispiel unterschiedliche Einrichtungen sein, die mit unterschiedlichen Befehlen und/oder über unterschiedliche Protokolle abgefragt werden können.

Einer Feldgeräteeinrichtung mögen somit mehrere Merkmale zugewiesen werden. Einerseits mag die Feldgeräteeinrichtung oder das Feldgerät ein individuell registriertes Merkmal aufweisen, wie beispielsweise eine Seriennummer, welche es erlaubt, die Feldgeräteeinrichtung von anderen Feldgeräteeinrichtungen zu unterscheiden, beispielsweise von anderen baugleichen Feldgeräten. Dieses Feldgerätemerkmal mag von einem Hersteller des Feldgerätes vergeben werden und der Vergabeprozess mag vorsehen, dass jedem Feldgerät individuell eine weltweit eindeutige Kennung zugewiesen wird. Diese Feldgerätekennung oder das Feldgerätemerkmal ist fest mit dem Feldgerät verbunden. Die Feldgerätekennung ist im internen Datennetz unbekannt, insbesondere auf einer Netzwerkschicht des OSI-Referenzmodells, und kann auch in dem internen Datennetz nicht geroutet werden. In einem Datennetz, welches auf Schicht 3 arbeitet, ist im Wesentlichen das individuelle Feldgerätemerkmal und/oder auch das Netzwerkmerkmal einzelner an dem Datennetz angeschlossener Geräte unbekannt, denn es ist keine Aufgabe des Datennetzes Information anhand von Kennungen höherer Schichten zu transportieren. Jedoch mag eine Vermittlungsstelleneinrichtung dennoch das Netzwerkmerkmal kennen und kann dieses auch ausgeben. So mag in einem GSM Netz, sowohl im Zugangsnetz als auch im Vermittlungsnetz, die IMEI ermittelt werden und im Hintergrund im Datennetz verteilt werden. Ein APN beispielsweise kennt die IMEI eines aktiven Teilnehmers und kann diese bei Bedarf auch ausgeben. Im Wesentlichen ist es auch möglich, dass die Messgerätezugangsvorrichtung zumindest teilweise die Funktionalität einer Vermittlungsstelleneinrichtung aufweist.

Die Feldgerätekennung kann beispielsweise in Form einer Seriennummer physikalisch in der Feldgeräteeinrichtung festgehalten oder eingebracht sein. In einem Beispiel mag das Feldgerätemerkmal am Gehäuse einer Feldgeräteeinrichtung angebracht sein. Das Feldgerätemerkmal kann aber auch in einer Firmware oder in einem festgelegten Speicherbereich der Feldgeräteeinrichtung in Form von Hardware oder einer festen Verdrahtung eingebracht sein. In diesem Fall kann das Feldgerätemerkmal auch mittels standardisierter Befehle, wie beispielsweise einer standardisierten Beschreibungssprache oder einer Bedienoberfläche ausgelesen werden. Das Feldgerätemerkmal mag somit dem Feldgerät einen weltweit eindeutigen Namen oder ein weltweit eindeutiges Kennzeichen zuweisen, außerhalb des Bereichs, der mittels einer internen Adressinformation oder einer externen Adressinformation angesprochen werden kann. Auf das Feldgerätemerkmal und/oder auf das Netzwerkmerkmal kann über physikalische Schnittstellen zugegriffen werden und entsprechende Werte können über diese Schnittstellen ausgelesen werden. Schnittstellen für das Auslesen können auf Basis von RS232, RS485, USB (Universal Serial Bus), I2C (Inter-Integrated Circuit), SPI (Serial Peripheral Interface) oder parallelen Bussystemen aufgebaut sein. Über die phyiskalischen Schnittstellen können Protokolle höherer Schichten eingesetzt werden. Das Profibus-Protokoll, Modbus-Protokoll, HART-Protokoll oder auch AT-Kommandos nach HAYES-Standard sind Beispiele für Protokolle, die über diese physikalischen Schnittstellen genutzt werden können. Auch die Abfrage mittels Beschreibungssprachen, wie DTM, EDD, Profibus kann über die physikalischen Schichten genutzt werden. Die Protokolle können wiederum genutzt werden, um auf Schichten über der Schicht 3 Feldgerätemerkmale von der Feldgeräteeinrichtung abzufragen.

Um eine Feldgeräteeinrichtung in einem Datennetz verwenden zu können, beispielsweise in einem Festnetz oder in einem drahtlosen Netz, wird der Feldgeräteeinrichtung eine Kennung zugewiesen, mit der diese Feldgeräteeinrichtung innerhalb des Netzes eindeutig identifizierbar ist. Dieses Netzwerkmerkmal mag es ermöglichen, die Feldgeräteeinrichtung innerhalb eines Netzwerkes von anderen an dem Netzwerk angeschlossenen Einheiten, wie beispielsweise anderen Feldgeräteeinrichtungen, Mobiltelefonen oder sonstigen Datenübertragungseinrichtungen, zu unterscheiden. Mittels des Netzwerkmerkmals mag das Feldgerät für eine Netzwerkverwaltungseinrichtung, insbesondere für eine Vermittlungsstelleneinrichtung, unterscheidbar werden. Dieses Netzwerkmerkmal mag jedoch noch keinen Hinweis auf die zugehörige Feldgeräteeinrichtung geben.

Über einen Eintrag einer Zuordnung eines Feldgerätemerkmals zu einem Netzwerkmerkmal in einer Datenbank mag eine Verknüpfung zwischen dem allgemeinen Feldgerätemerkmal und dem netzwerkspezifischen Netzwerkmerkmal hergestellt werden. Diese Verknüpfung kann beispielsweise in einem Herstellprozess erfolgen, wenn eine Netzwerkmerkmalträgereinrichtung, beispielsweise eine SIM-Karte, mit einer Feldgeräteeinrichtung verbunden wird oder in eine Feldgeräteeinrichtung eingebaut wird. Eine Netzwerkmerkmalträgereinrichtung kann auch fest in eine Feldgeräteeinrichtung eingebaut sein, sie kann jedoch auch durch eine Halterung oder Halteeinrichtung auswechselbar mit einer Feldgeräteeinrichtung verbunden sein. Anstatt dem Eintrag bei der Herstellung in eine Datenbank kann eine Zuordnung eines Feldgerätemerkmals einer Feldgerätemerkmalträgereinrichtung zu einem Netzwerkmerkmal einer Netzwerkmalträgereinrichtung auch durch Auslesen erfolgen. Ein Feldgerätemerkmal kann beispielsweise über eine Beschreibungssprache abgefragt werden, während ein Netzwerkmerkmal über einen speziellen Netzwerkbefehl abgefragt werden kann.

Alternativ ist es auch möglich, dass eine Feldgeräteeinrichtung beim Einschalten die unterschiedlichen Merkmale an eine zentrale Einheit, an einen zentralen Server oder an eine andere Netzwerkverwaltungseinrichtung weiterleitet. Beispielsweise kann eine Feldgeräteeinrichtung, welche mit einer Netzwerkmerkmalträgereinrichtung verbunden ist, beim Einschalten mittels einer SMS oder einer geschalteten Verbindung, wie einer CSD-Verbindung, das Feldgerätemerkmal und/oder das Netzwerkmerkmal an ein Ziel weiterleiten. Das Netzwerkmerkmal und das Feldgerätemerkmal können entweder über denselben Weg oder über einen alternativen Weg weitergeleitet werden. Die Merkmale können an dieselbe Netzwerkverwaltungseinrichtung oder aber an unterschiedliche Netzwerkverwaltungseinrichtungen, wie an die Messgerätezugangsvorrichtung oder an die Vermittlungsstelleneinrichtung weitergeleitet werden.

Durch die Zuordnung eines Feldgerätemerkmals zu einem Netzwerkmerkmal, mag eine Feldgeräteeinrichtung über das Feldgerätemerkmal innerhalb eines Datennetzes erreichbar sein, in welchen das Netzwerkmerkmal verwendet wird. Über diese Zuordnung eines Feldgerätemerkmals zu einem Netzwerkmerkmal kann auch eine Adressinformation oder eine Routinginformation ermittelt werden, welche es erlaubt, Datenpakete an ein Feldgerät weiterzuleiten. Es lässt sich beispielsweise ein Feldgerätemerkmal, wie beispielsweise die Seriennummer eines Feldgeräts, dazu verwenden, das Feldgerät unter dieser Seriennummer in einem öffentlichen oder privaten Netz anzusprechen.

Das Verfahren zum Steuern des Zugangs zu einem Messgerät mag auf einem maschinenlesbaren Speichermedium gespeichert sein. Ferner mag das Verfahren auch als ein Programmelement realisiert sein, welches, wenn es von einem Prozessor ausgeführt wird, die Verfahrensschritte zum Steuern des Zugangs zu einem Messgerät ausführt.

Gemäß einem weiteren Aspekt der vorliegenden Erfindung ist das Feldgerätemerkmal ein Netzwerkmerkmal der Feldgeräteeinrichtung.

Das Netzwerkmerkmal ist eine Kennung, die es der internen Datenschnittstelle, der Vermittlungsstelleneinrichtung oder der Messgerätezugangsvorrichtung erlaubt, die angeschlossene Feldgeräteeinrichtung eindeutig an der internen Datenschnittstelle zu identifizieren und von anderen Feldgeräteeinrichtungen zu unterscheiden. Das Netzwerkmerkmal kann eine Kennung eines Zugangsnetzes sein, insbesondere eines mobilen Zugangsnetz. Beispielsweise ist ein Netzwerkmerkmal auf einer Netzwerkmerkmalträgereinrichtung enthalten, die fest oder lösbar mit der Feldgeräteeinrichtung verbunden sein mag.

Das Netzwerkmerkmal kann in einem Beispiel auch volatil sein, d.h. es kann frei einer Feldgeräteeinrichtung zuordenbar sein. Es kann ein Mitteilungsmechanismus in der internen Datenschnittstelle, auf einer Vermittlungsstelleneinrichtung und/oder auf der Feldgeräteeinrichtung vorgesehen sein, der ein einer Feldgeräteeinrichtung zugeteiltes Netzwerkmerkmal von der internen Datenschnittstelle aus, von der Vermittlungsstelleneinrichtung aus oder von der Feldgeräteeinrichtung aus an die Messgerätezugangseinrichtung oder an die Messgerätezugangsvorrichtung verteilt, insbesondere an deren Datenbank. Ein Netzwerkmerkmal, wie eine IMEI, mag nur zur "Lebzeit" einer Feldgeräteeinrichtung zugewiesen sein, also beispielsweise nur während der Zeit, während der die Feldgeräteeinrichtung eingeschaltet oder im Netz registriert ist. Für die Verwaltung des Netzwerkmals mag die Feldgeräteeinrichtung eine Netzwerkmerkmalsträgereinrichtung aufweisen, insbesondere einer Funkeinheit, wie eine GPRS-Einheit, eine GSM-Einheit und/oder eine LTE Einheit. Die Funkeinheit und/oder der Netzwerkmerkmalsträgereinrichtung kann fest in der Feldgeräteeinrichtung verbaut sein. In einem anderen Beispiel kann Netzwerkmerkmalsträgereinrichtung oder Funkeinheit per Steckverbindung an der Feldgeräteeinrichtung lösbar angekoppelt sein, beispielsweise als USB-Dongle. Durch die lösbare Verbindung der Funkeinheit und/oder der Netzwerkmerkmalsträgereinrichtung mag das Netzwerkmerkmal nur quasi-permanent mit der Feldgeräteeinrichtung verbunden sein. In anderen Worten mag das Netzwerkmerkmal im Wesentlichen weniger stark mit der Feldgeräteeinrichtung verbunden sein, als beispielsweise ein Feldgerätemerkmal.

Gemäß einem weiteren Aspekt der vorliegenden Erfindung ist die Verwaltungseinrichtung der Messgerätezugangsvorrichtung ferner eingerichtet, eine Verknüpfung eines Netzwerkmerkmals der Feldgeräteeinrichtung mit der internen Adressinformation der Feldgeräteeinrichtung zu ermitteln, um das Feldgerätemerkmal in eine interne Adressinformation der Feldgeräteeinrichtung zu übersetzen. Die Netzwerkkennung oder das Netzwerkmerkmal selbst mag nicht zum Routen eines Datenpakets und zum Erreichen eines Zieles geeignet sein. Das Netzwerkmerkmal der Feldgeräteeinrichtung ist eine Kennung, die es der internen Datenschnittstelle erlaubt, die angeschlossene Feldgeräteeinrichtung eindeutig an der internen Datenschnittstelle zu identifizieren. Das Netzwerkmerkmal mag es ermöglichen, die Feldgeräteeinrichtung von anderen Feldgeräteeinrichtungen, welche ebenfalls an der internen Datenschnittstelle angeschlossen sind, zu unterscheiden. Mittels des Netzwerkmerkmals ist die Feldgeräteeinrichtung innerhalb des Netzes, beispielsweise des privaten Netzes, eindeutig erreichbar.

Gemäß einem weiteren Aspekt der vorliegenden Erfindung weist die interne Datenschnittstelle eine Vermittlungsstelleneinrichtung auf. Die Vermittlungsstelleneinrichtung ist eingerichtet, eine Verknüpfung des Netzwerkmerkmals der Feldgeräteeinrichtung mit der internen Adressinformation der Feldgeräteeinrichtung herzustellen. Als Netzwerkmerkmal kann eine IMEI oder eine ICCID eines Datennetzes genutzt werden. Mit diesem Netzwerkmerkmal kann sich eine Feldgeräteeinrichtung oder ein Feldgerät, welchem dieses Netzwerkmerkmal zugeordnet ist, in einem Datennetz registrieren. Durch die Registrierung wird die Feldgeräteeinrichtung von anderen Feldgeräteeinrichtungen für das Netz unterscheidbar. Die Vermittlungsstelleneinrichtung erhält jedoch keinen direkten Hinweis auf ein Feldgerätemerkmal. Die Vermittlungsstelleneinrichtung kann jedoch eine Verknüpfung zwischen dem Netzwerkmerkmal und einer internen Adressinformation herstellen, die es erlaubt, das Feldgerät, welchem das Netzwerkmerkmal zugeordnet worden ist, über eine Adressinformation oder über eine Netzwerkadresse anzusprechen.

Ein Beispiel für eine Vermittlungsstelleneinrichtung ist eine Access Point Name-Einrichtung (APN-Einrichtung) oder ein Access Point Name (APN). Die Vermittlungsstelleneinrichtung, insbesondere der APN, mag in einem Beispiel auf der OSI-Schicht 3 arbeiten und folglich im Wesentlichen nur netzwerkspezifische Parameter, netzwerkspezifische Eigenschaften und/oder netzwerkspezifische Merkmale kennen. Das Netzwerkmerkmal ist im Wesentlichen der Schicht 3 zugeordnet und somit auch der Vermittlungsstelleneinrichtung bekannt. Ein Feldgerätemerkmal, wie die Seriennummer, mag im Wesentlichen auf der Anwendungsschicht genutzt werden und dient somit im Wesentlichen lediglich in der Anwendungsschicht zur Identifizierung der Feldgeräteeinrichtung. Das Feldgerätemerkmal, beispielsweise die Seriennummer, dient im Wesentlichen lediglich der Anwendungsschicht oder Schicht 7 zur Identifizierung und ist auf einer darunter liegenden Schicht nicht sichtbar. In anderen Worten mag die Messgerätezugangsvorrichtung eine Verknüpfung von Parametern herstellen, die im Wesentlichen auf unterschiedlichen Schichten des OSI Schichtenmodells genutzt werden. Das Feldgerätemerkmal mag einer anderen Schicht als das Netzwerkmerkmal zugeordnet sein. Folglich mag die Vermittlungsstelleneinrichtung das Feldgerätemerkmal nicht kennen, wie beispielsweise die Seriennummer der Feldgeräteeinrichtung.

Gemäß einem anderen Aspekt der vorliegenden Erfindung weist die interne Datenschnittstelle einen Port auf, wobei die interne Adressinformation der Feldgeräteeinrichtung mit diesem Port an der internen Datenschnittstelle in Beziehung steht.

Über virtuelle Verbindungen mag eine Vielzahl von Feldgeräteeinrichtungen innerhalb eines Netzes über die interne Datenschnittstelle erreichbar sein. Die Feldgeräteeinrichtungen, insbesondere die auf ihnen enthaltenen Netzwerkmerkmalträgereinrichtungen, mögen sich bei Netzzugangseinrichtungen, wie beispielsweise in einer Basisstation, einer BS oder einem eNodeB registrieren. Bei diesem Registrierprozess mag ihnen ein Port zugewiesen werden, so dass innerhalb des Netzes lediglich der Port angesprochen werden muss, um das Gerät zu erreichen, welches sich hinter diesem Port befindet und mit dem Port in Verbindung steht.

Gemäß einem anderen Aspekt der vorliegenden Erfindung ist die Vermittlungsstelleneinrichtung so eingerichtet, dass sie entweder automatisch oder auf eine Anfrage die interne Adressinformation der Feldgeräteeinrichtung und/oder das Netzwerkmerkmal der Feldgeräteeinrichtung bereitstellt.

Somit lässt sich beispielsweise von einer zentralen Stelle, wie beispielsweise einem zentralen Server, die Vermittlungsstelleneinrichtung abfragen, um eine der Feldgeräteeinrichtung zugeordnete Adressinformation oder ein entsprechend der Feldgeräteeinrichtung zugeordnetes Netzwerkmerkmal zu ermitteln. Ferner kann von der Vermittlungsstelleneinrichtung die interne Adressinformation und/oder das Netzwerkmerkmal proaktiv an eine zentrale Stelle weitergegeben werden. Folglich lassen sich Zuordnungen der internen Adressinformation zu einem Netzwerkmerkmal herstellen.

Gemäß noch einem anderen Aspekt der vorliegenden Erfindung ist die Befehlsinformation zumindest eine Befehlsinformation, die aus einer Gruppe von Befehlsinformationen ausgewählt ist, wobei die Gruppe von Befehlsinformationen aus einer Abfrage, einem HTTP-Befehl, einem Ping-Befehl, einem FTP-Befehl, einem SSH-Befehl und/oder einem Telnet-Befehl besteht. Beispiele für einen HTTP-Befehl sind ein POST, ein GET, ein HEAD, ein PUT oder ein REQUEST.

Die Befehlsinformation wird von der Messgerätezugangsvorrichtung an die interne Datenschnittstelle, also beispielsweise an das private Netz, so weitergereicht, wie sie von dem öffentlichen Netz oder von der externen Datenschnittstelle erhalten worden ist. In anderen Worten wird jede von der Messgerätezugangsvorrichtung empfangene Befehlsinformation über die Messgerätezugangsvorrichtung an das interne Netz weitergeleitet. Folglich kann die Messgerätezugangsvorrichtung kontrollieren, welche Befehlsinformation oder welche Befehle an eine Feldgeräteeinrichtung weitergereicht werden sollen. Außerdem kann die Messgerätezugangsvorrichtung jeden empfangenen Befehl in das interne Netz oder Privatnetz weitergeben und dort das gewünschte Ziel erreichen. Somit wird eine Befehlsinformation innerhalb des privaten Netzes routbar. Es lassen sich also interne Geräte des privaten Netzes von außen, also von dem öffentlichen Netz aus, ansprechen, obwohl deren interne Bezeichnung nicht bekannt ist. Der im Wesentlichen einzige Weg die Feldgeräteeinrichtung aus dem öffentlichen Netz zu erreichen mag über die Messgerätezugangsvorrichtung führen. Lediglich eine individuelle Kennzeichnung, beispielsweise ein Feldgerätemerkmal, kann als Ziel für eine Befehlsinformation angegeben werden. Ferner muss der Betreiber des Netzes bekannt sein, in dem sich die Feldgeräteeinrichtung befindet. Die Messgerätezugangsvorrichtung macht eine entsprechende Umsetzung auf eine interne Routinginformation, um die Befehlsinformation an das gewünschte Ziel weiterzureichen. Sämtliche Befehlsinformationen laufen jedoch über die Messgerätezugangsvorrichtung. Die Messgerätezugangsvorrichtung gibt nicht nur lediglich eine Adressinformation nach außen bekannt, die dann genutzt werden kann, um das Ziel zu erreichen, ohne die Messgerätezugangsvorrichtung mehr zu involvieren. Die Messgerätezugangsvorrichtung ist vielmehr in den gesamten Routingprozess oder Informationsverteilprozess involviert, indem sämtliche Befehlsinformation oder Datenpakete über die Messgerätezugangsvorrichtung verteilt werden. Auf diese Art und Weise kann die Messgerätezugangsvorrichtung den Zugang zu einer Feldgeräteeinrichtung steuern.

Gemäß einem anderen Aspekt der vorliegenden Erfindung ist die Rechenleistung der Messgerätezugangsvorrichtung leistungsfähiger als die Rechenleistung einer an der internen Datenschnittstelle angeschlossenen Feldgeräteeinrichtung.

Eine Feldgeräteeinrichtung weist im Wesentlichen nur eine geringe Rechenleistung auf. Somit lassen sich mittels einer Feldgeräteeinrichtung alleine nur schwierig Auswertungen von empfangenen Daten durchführen. Durch das Vorsehen einer hohen Rechenleistung in der Messgerätezugangsvorrichtung können Datenpakete von der Messgerätezugangsvorrichtung untersucht und ausgewertet werden und die Feldgeräteeinrichtung muss sich nicht mehr um derartige Operationen oder Tätigkeiten kümmern, wodurch eine weniger leistungsfähige Hardware für die Feldgeräteeinrichtung zum Einsatz kommen kann. In anderen Worten mag die Messgerätezugangsvorrichtung Aufgaben der Feldgeräteeinrichtung übernehmen, wie beispielsweise Sicherheitsaufgaben.

Gemäß noch einem anderen Aspekt der vorliegenden Erfindung ist die Messgerätezugangsvorrichtung eingerichtet, einen Paketübertragungsmodus der Vermittlungsstelleneinrichtung zu steuern, also beispielsweise einzuschalten oder auszuschalten.

Alternativ kann die Messgerätezugangsvorrichtung die Vermittlungsstelleneinrichtung auch derart steuern, dass die Vermittlungsstelleneinrichtung eine Verknüpfung des Netzwerkmerkmals der Feldgeräteeinrichtung mit der internen Adressinformation automatisch oder auf eine Abfrage bekannt gibt.

Die Messgerätevorrichtung kann die Vermittlungsstelleneinrichtung beispielsweise so steuern, dass der Paketübertragungsmodus und/oder ein Modus zum automatischen Bereitstellen von einer Verknüpfung eines Netzwerkmerkmals zu einer internen Adressinformation oder zum Bereitstellen dieser Information auf eine Abfrage an- und ausgeschaltet werden kann.

Der Paketübertragungsmodus kann beispielsweise zwischen einem paketvermittelnden Übertragungsmodus einem SMS Modus oder einem leitungsvermittelnden Übertragungsmodus umgeschaltet werden. In dem paketvermittelnden Modus werden Pakete genutzt, um Ziele, wie beispielsweise die Feldgeräteeinrichtung, zu erreichen, während in dem leitungsvermittelnden Modus oder CSD Modus feste Verbindungen über Modems eingerichtet werden. Ein weiterer Betriebsmodus ist das Nutzen von SMS (Short Message Service), um Daten auszutauschen. In anderen Worten bedeutet das, dass leitungsvermittelte Datendienste (CSD) auch parallel zu den paketvermittelten Datendiensten existieren können. Im CSD-Modus wird die Vermittlungsstelleneinrichtung über eine Wählverbindung kontaktiert, die die Verbindung weiter zu der Feldgeräteeinrichtung vermittelt. Die Feldgeräteeinrichtung weist ein Modem auf, das die Wahlverbindung terminiert. Durch das Einwählen auf das Modem wird dem Modem keine dynamische Adresse zugewiesen. Die Adressierung erfolgt über die Mobilfunkrufnummer als Adressinformation und ist der Feldgeräteeinrichtung zugeordnet. Diese Mobilfunknummer kann als Netzwerkmal genutzt werden und ist im Wesentlichen immer bekannt. Die Mobilfunknummer ist im Wesentlichen nicht veränderlich und in der SIM vorhanden. Während bei den paketvermittelten Datendiensten dem Port, an dem die Feldgeräteeinrichtung angeschlossen ist oder der Feldgeräteeinrichtung selbst eine IP-Adresse zugewiesen wird, welche keine eindeutige, dauerhafte Zuordnung zu der SIM-Karte aufweist.

Zum Einstellen des Paketübertragungsmodus können spezielle Befehle genutzt werden. Die Vermittlungsstelle, der APN oder die Vermittlungsstelleneinrichtung kann aber auch eine Bedienkonsole bereitstellen, mit der der Paketübertragungsmodus eingeschaltet, ausgeschaltet oder in einen anderen Modus umgeschaltet werden kann. In einem Embedded Modus können sich Feldgeräteeinrichtungen mit der Vermittlungsstelleneinrichtung verbinden und den Übertragungsmodus festlegen. Für das Umschalten des Paketübertragungsmodus mag an der Vermittlungsstelleneinrichtung eine Schnittstelle bereitgestellt werden, die die Umschaltsignale empfangen kann. Ferner mag die Vermittlungsstelleneinrichtung eine Umschalteeinrichtung aufweisen, die eingerichtet ist, einen Paketübertragungsmodus umzuschalten.

Wenn der Paketübertragungsmodus eingeschaltet ist oder an ist, kann durch Befehle bestimmt werden, ob die internen Adressinformationen, die der Vermittlungsstelleneinrichtung bekannt sind, außerhalb des internen Datennetzes bekannt gegeben werden.

Die Messgerätezugangsvorrichtung oder ein zentraler Server kann den Paketübertragungsmodus anschalten oder abschalten. In dem Paketübertragungsmodus wird es einem Netzbetreiber ermöglicht, Feldgeräteeinrichtungen über eine paketvermittelte Technologie anzusprechen. Ist der Paketübertragungsmodus eingeschaltet, sind die Feldgeräteeinrichtungen über Paketinformationen oder Adressinformationen von außerhalb der Vermittlungsstelleneinrichtung oder von außerhalb des APNs zu erreichen.

Wird der Paketübertragungsmodus generell freigegeben, kann ein Sicherheitsrisiko bestehen, da jedes Ziel an der Vermittlungsstelleneinrichtung über das Paketnetz erreichbar ist. Diese leichte Erreichbarkeit kann jedoch auch ein Sicherheitsrisiko darstellen, weshalb in der Regel Netzbetreiber den Paketübertragungsmodus abschalten und lediglich den Verbindungsübertragungsmodus über SMS oder CSD zu den Endgeräten zulassen, insbesondere zu den Feldgeräteeinrichtungen. Eine Messgerätezugangsvorrichtung oder ein zentraler Server, der den Paketübertragungsmodus ein- und abschalten kann, kann den Zugang zu dem internen Netz und somit auch den Zugang zu der Vermittlungsstelleneinrichtung kontrollieren. Somit kann die Messgerätezugangsvorrichtung, wenn sie beginnt die Kontrolle des Zugangs zum internen Netz zu übernehmen, den Paketübertragungsmodus einschalten, da die Messgerätezugangsvorrichtung die Sicherheitsmaßnahmen für den Zugang zu dem internen Netz steuern kann. Im Wesentlichen wird das interne Datennetz ohne Sicherheitsvorkehrungen betrieben sozusagen geöffnet und die Sicherheitsüberwachung in die Messgerätezugangsvorrichtung verlegt.

Gemäß noch einem anderen Aspekt der vorliegenden Erfindung ist die Verwaltungseinrichtung der Messgerätezugangsvorrichtung eingerichtet, das Feldgerätemerkmal mittels einer Mustererkennung aus der externen Adressinformation zu extrahieren.

Eine Adressinformation, mit der eine Feldgeräteeinrichtung in einem öffentlichen Netz erreichbar ist, kann eine Vielzahl von Adressanteilen aufweisen. Einerseits kann eine Adressinformation einen öffentlichen Adressanteil aufweisen und einen privaten Adressanteil. Der öffentliche Adressanteil kann genutzt werden, um die Messgerätezugangsvorrichtung innerhalb des öffentlichen Netzes zu erreichen. Der interne Adressanteil kann wiederum von der Messgerätezugangsvorrichtung genutzt werden, um ein internes Ziel zu bestimmen. Beispielsweise kann eine URL (Uniform Resource Locator) das Feldgerätemerkmal als Teil einer internen Adresse oder privaten Adresse aufweisen. Dieses Feldgerätemerkmal kann anhand bestimmter Kriterien, wie beispielsweise einer Mustererkennung oder Filterung, aus der gesamten Adresse herausgefiltert werden. Als Filter kann in einem Beispiel eine Netzwerkmaske eingesetzt werden.

Da die Messgerätezugangsvorrichtung der im Wesentlichen zentrale Punkt für den Zugang zu einem privaten Netz ist, kann die Messgerätezugangsvorrichtung auch anhand der internen Adressinformation feststellen, ob eine Feldgeräteeinrichtung mit der Befehlsinformation angesprochen werden soll oder ob eine andere Aktion, wie beispielsweise eine Abfrage einer Informationsseite oder einer Webpage durchgeführt werden soll. Eine URL kann beispielsweise eine Schreibweise vorsehen, bei der Punkte verschiedene Adressanteile voneinander trennen. Diese Schreibweise kann in eine numerische Adressinformation, beispielsweise eine IP (Internet Protocol) Adresse umgesetzt werden. So kann die Adresse *www.Feldgeräte-Tag.Seriennummer.vega.com* in drei generelle Adressbestandteile unterteilt werden. Die Kennzeichnung www identifiziert die nachfolgenden Informationen als URL und somit als eine Adressinformation. Der Bestandteil *Feldgeräte-Tag.Seriennummer* bezeichnet einen internen Adressanteil, während der Anteil *vega.com* einen öffentlichen Adressanteil oder eine sog. Domain kennzeichnet. Unter dem öffentlichen Adressanteil ist die Messgerätezugangsvorrichtung in dem öffentlichen Netz erreichbar. Die Messgerätezugangsvorrichtung bestimmt den internen Adressanteil, um das Feldgerätemerkmal, in dem angeführten Beispiel den Feldgeräte-Tag oder beispielsweise die Seriennummer herauszufiltern. Ein Feldgeräte-Tag oder eine Seriennummer, insbesondere eine daraus abgeleitete interne Adressinformation, können als Feldgerätemerkmal genutzt werden, um die Feldgeräteeinrichtung in dem internen Netz zu erreichen. Ein Feldgeräte-Tag ist ein spezifisches Tag oder Merkmal, welches leichter änderbar sein mag als eine Seriennummer. Ein Feldgeräte-Tag mag auch eine Beschriftung, eine Markierung oder eine Bezeichnung einer Feldgeräteeinrichtung sein, welche eine alphanummerischer Form aufweist. Ein Tag mag sich jedoch von einer Adressinformation unterscheiden und im Wesentlichen keinen Bezug zu dem Netzwerk haben. Ein Tag kann von einem Kunden frei vergeben werden. Da sich ein Feldgeräte-Tag leicht ändern lässt, ist bei einem Einsatz eines Feldgeräte-Tags als Feldgerätemerkmal eine Feldgeräteeinrichtung so eingerichtet, dass bei jeder Änderung des Feldgeräte-Tags dieses Feldgerätemerkmal in der Datenbank der Messgerätezugangsvorrichtung eingetragen und/oder aktualisiert wird. So mag gewährleistet sein, dass bei einer Anfrage mit dem geänderten Feldgerätemerkmal auch wieder eindeutig eine Verbindung zu der zugehörigen Feldgeräteeinrichtung aufgebaut werden kann. Eine Steuereinrichtung mag angepasst sein, die Änderung des Feldgerätemerkmals zu erkennen und im Wesentlichen unmittelbar an die Messgerätezugangsvorrichtung zu berichten, entweder über das paketorientierte Datennetz oder über das leitungsvermittelte Datennetz oder über SMS. Damit mag die Steuereinrichtung einen Aktualisierungsmechanismus implementieren.

In einem anderen Beispiel kann ein Tag als alphanummerische Kennung bei der Produktion der Feldgeräteeinrichtung vergeben werden und im Wesentlichen unveränderlich in der Feldgeräteeinrichtung angeordnet sein. In einem anderen Beispiel kann ein Feldgeräte-Tag als Seriennummer eingesetzt werden.

Durch das Auflösen einer externen Adressinformation in verschiedene Bestandteile kann eine Feldgeräteeinrichtung, welche lediglich in einem internen Netz bekannt ist, aus einem externen Netz angesprochen werden, ohne auf nötige Sicherheitsvorkehrungen verzichten zu müssen.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es ist anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf Figuren beschrieben.
Fig. 1 zeigt eine Messgerätezugangsvorrichtung gemäß einem exemplarischen Ausführungsbeispiel der vorliegenden Erfindung.
Die Fig. 2 zeigt ein Flussdiagramm für ein Verfahren zum Steuern des Zugangs zu einem Messgerät gemäß einem exemplarischen Ausführungsbeispiel der vorliegenden Erfindung.
Fig. 3 zeigt ein Blockschaltbild eines Messgerätesystems, welches den externen Zugang zu einer Vielzahl von Feldgeräten steuert, gemäß einem exemplarischen Ausführungsbeispiel der vorliegenden Erfindung.
Fig. 4 zeigt ein Nachrichtenflussdiagramm für das Übersetzen eines Feldgerätemerkmals in eine Adressinformation mit einer Vermittlungsstelleneinrichtungsanfrage während der Laufzeit gemäß einem exemplarischen Ausführungsbeispiel der vorliegenden Erfindung.
Fig. 5 zeigt ein Nachrichtenflussdiagramm für das Übersetzen eines Feldgerätemerkmals in eine Adressinformation mittels einer Datenbank gemäß einem exemplarischen Ausführungsbeispiel der vorliegenden Erfindung.

### Ausführliche Beschreibung von Ausführungsbeispielen

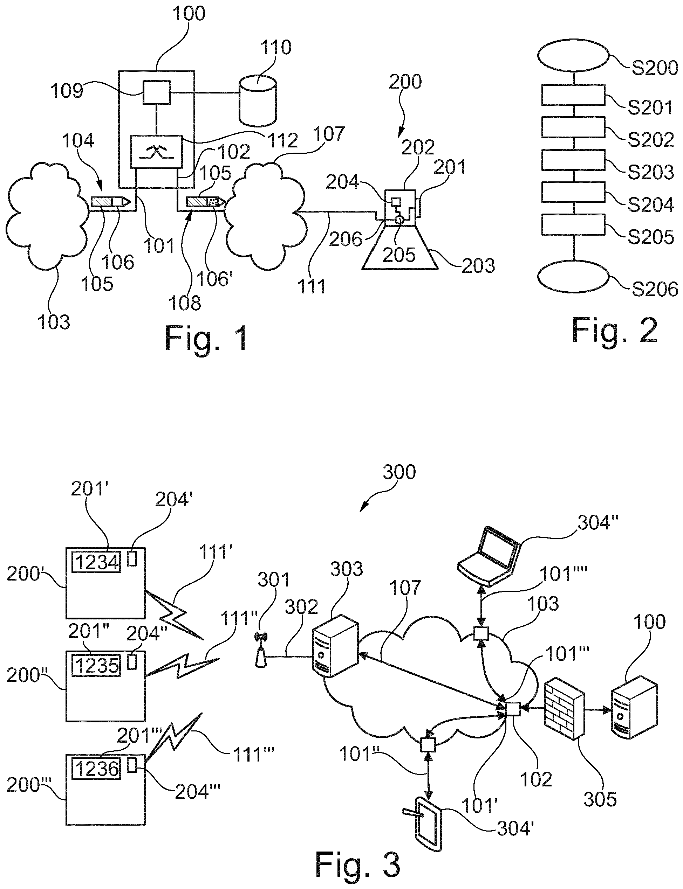

Die Darstellungen in den Figuren sind schematisch und nicht maßstäblich. In der folgenden Beschreibung der Fig. 1 bis 5 werden die gleichen Bezugszeichen für gleiche oder sich entsprechende Elemente verwendet.

Die Fig. 1 zeigt eine Messgerätezugangsvorrichtung 100 oder einen zentralen Server 100 gemäß einem exemplarischen Ausführungsbeispiel der vorliegenden Erfindung. Der zentrale Server 100 weist die externe Datenschnittstelle 101 und die interne Datenschnittstelle 102 auf. Die externe Datenschnittstelle 101 ist eingerichtet, um sich mit dem öffentlichen Netz 103 oder dem Internet 103, also einem öffentlichen Datennetz, zu verbinden. Hierzu erhält die externe Datenschnittstelle 101 eine öffentliche Adresse und kann öffentliche Daten oder öffentliche Pakete 104 empfangen. Die aus dem öffentlichen Netz 103 empfangenen Datenpakete 104 weisen im Wesentlichen einen Bereich mit einer Befehlsinformation 105 und einen Bereich mit einer Adressinformation 106 oder URL 106 auf. Die Adressinformation 106 oder öffentliche Adresse 106 weist zumindest einen Anteil auf, mit welchem das Paket 104 über das öffentliche Netz 103 die Messgerätezugangsvorrichtung 100 erreichen kann. Die Messgerätezugangsvorrichtung 100 regelt somit den Verkehr, der von der externen Datenschnittstelle 101 zu der internen Datenschnittstelle 102 gelangen darf. Über die interne Datenschnittstelle 102 ist das interne Netz 107 oder das private Netz 107 zu erreichen. Um eine Befehlsinformation, die die Messgerätezugangsvorrichtung 100 aus dem öffentlichen Netz empfängt, über das private Netz 107 weiterzuleiten, wird ein privates Datenpaket 108 erstellt. Dieses weist die im Wesentlichen unveränderte Befehlsinformation 105 aus dem öffentlichen Datenpaket 104 auf. Außerdem weist das interne Datenpaket 108 eine interne Adressinformation 106' auf, die im Wesentlichen nur in dem privaten Netz 107 eine Gültigkeit hat. Die interne Datenschnittstelle 107 kann als eine Standleitung, als ein Netzwerkstunnel oder als ein VPN (Virtual Private Network) realisiert sein. Über das private Netz 107 kann eine an dem privaten Netz 107 angeschlossene Feldgeräteeinrichtung 200 angeschlossen sein. Die Feldgeräteeinrichtung 200 kann ein Sensor 200, ein Feldgerät 200 oder ein Messgerät 200 sein.

Um das externe Datenpaket 104 in das interne Datenpaket 108 zu wandeln, ist die externe Datenschnittstelle 101 so eingerichtet, dass das externe Datenpaket 104 empfangen werden kann. Dazu ist der externen Datenschnittstelle zumindest eine öffentliche Adresse des öffentlichen Netzes 103 zugewiesen. Außerdem ist der externen Datenschnittstelle 101 ein Domainname zugeordnet, beispielsweise *vega.com.* Ferner weist die externe Datenschnittstelle Netzwerktreiber in Form von Netzwerkkarten und Netzwerkprotokollstacks auf, die es erlauben, mit dem externen Datennetz 103 zu kommunizieren.

Die externe Datenschnittstelle 101 kann, nachdem sie ein gültiges externes Datenpaket 104 empfangen hat, aus diesem Datenpaket zumindest die externe Adressinformation 106 und die Befehlsinformation 105 extrahieren und diese extrahierte Information an die Verwaltungseinrichtung 109 weiterleiten. Die Verwaltungseinrichtung 109 kann die ihr zur Verfügung gestellte externe Adressinformation so zerlegen, dass ein in der externen Adressinformation insbesondere in der URL enthaltenes Feldgerätemerkmal ermittelt wird, mit dem das an der internen Datenschnittstelle 102 angeschlossene Feldgerät 200 oder die daran angeschlossene Feldgeräteeinrichtung 200 identifiziert werden kann. Um das Feldgerätemerkmal aus der externen Adressinformation zu ermitteln, kann die Adressinformation ein vorgegebenes Format aufweisen. Ferner kann die Verwaltungseinrichtung mithilfe von Mustererkennungsverfahren aus der externen Adressinformation 106 Feldgerätemerkmale erkennen und dabei feststellen, dass die Feldgerätemerkmale einer Feldgeräteeinrichtung 200 zuzuordnen sind, welche an der internen Datenschnittstelle 102 oder an dem internen Datennetz 107 angeschlossen sind. In anderen Worten, werden alle an dem Server 100 ankommenden Anfragen analysiert, um festzustellen, ob es sich um eine Anfrage an ein Feldgerät handelt oder ob eine andere Aktion durchgeführt werden soll, beispielsweise eine Homepage angezeigt werden soll. Alternativ zum Empfangen eines externen Datenpakets kann über eine GUI (Graphical User Interface) eine Eingabemaske bereitgestellt werden, auf der sich ein Benutzer oder eine Anwendung mit Anmeldeparametern identifiziert. Beispielsweise kann eine Website auf der Homepage des Geräteherstellers angeboten werden, auf der sich registrierte Benutzer anmelden können, um auf ihre Geräte zuzugreifen. Solch eine Eingabemaske kann auch vorsehen, dass das Feldgerätemerkmal, wie die Seriennummer, eingegeben werden kann. Bei einer Eingabe auf einer Eingabemaske kann das Extrahieren des Feldgerätemerkmals entfallen. Die Anmeldeparameter können im Gerät hinterlegt sein, müssen aber in jedem Fall immer einem eindeutigen Feldgerätemerkmal zugeordnet werden können, welches im Feldgerät hinterlegt ist und wiederum über der Datenbank 110 bekannt ist und somit auch einer internen Adresse zuordenbar ist.

Die Verwaltungseinrichtung kann, nachdem sie ein Feldgerätemerkmal aus der Adressinformation herausgefiltert hat und erkannt hat, mit dem Feldgerätemerkmal eine Abfrage in einer Datenbank 110 machen, um aus der externen Adressinformation 106 zu ermitteln, ob die in dem zugehörigen externen Datenpaket 104 enthaltene Befehlsinformation 105 an ein an dem internen Netz 107 oder an der internen Datenschnittstelle 102 angeschlossenes Feldgerät 200 weitergeleitet werden soll oder darf.

Bei der Messgerätezugangsvorrichtung 100 kann es sich somit um einen zentralen Server 100 oder einen zentralen Zugangsserver 100 zu dem internen Netz 107 handeln, der festlegt, welche von einem öffentlichen Netz 103 empfangene Befehlsinformation 105 an ein Feldgerät 200 in einem privaten Netz weitergeleitet werden darf. Somit kann der zentrale Server 100 eine Sicherheitsfunktion sowohl des privaten Netzes 107 als auch der Feldgeräteeinrichtung 200 oder des Feldgeräts 200 übernehmen. Entsprechend müssen in dem privaten Netz 107 und/oder in dem Feldgerät 200 im Wesentlichen keine Sicherheitsvorkehrungen getroffen werden. Somit kann beispielsweise eine paketorientierte Übertragung in dem privaten Netz 107 vorgesehen werden, über die auch eine Verbindung von dem zentralen Server 100 zu dem Feldgerät 200 möglich ist. Wäre in dem privaten Netz 107 lediglich eine CSD-Verbindung oder SMS-Verbindung zwischen dem zentralen Server 100 und dem Feldgerät 200 möglich, so könnte der Server 100 lediglich über eine langsame und evtl. sogar teure Datenverbindung auf das Feldgerät 200 zugreifen. Die Übertragung eines Datenpakets 108 über ein paketorientiertes Netz 107 kann flexibler und leistungsfähiger sein, als eine entsprechende CSD-Verbindung. Da die Verbindung zwischen Server 100 und Feldgerät 200 über ein privates Netz 107 geführt ist, beispielsweise über eine Standleitung 107 oder über ein VPN 107, kann ein Betreiber des privaten Netzes nach seinem Belieben auf die Sicherheitsvorkehrungen verzichten, die beispielsweise ein Betreiber eines öffentlichen Netzes tätigen würde, um einen Zugriff über ein Netz auf das Feldgerät oder eine andere Endgeräteeinrichtung 200 zu verhindern. Beispielsweise würde ein öffentlicher Betreiber eine dem Endgerät 200 zugewiesene Adresse nicht außerhalb des Netzes 107 bekannt geben, um es über ein Paketnetz erreichbar zu machen. Die Verbindung 111 zwischen dem privaten Netz und dem Feldgerät 200 kann drahtgebunden, aber auch drahtlos ausgeführt sein. Ein Beispiel für eine drahtlose Verbindung ist eine WLAN-Verbindung (Wireless LAN, Local Area Network). In einer anderen Ausführungsform kann als drahtlose Verbindung 111 auch ein öffentliches Mobilfunknetz 111 genutzt werden. Um das öffentliche Mobilfunknetz zu nutzen, meldet sich das Feldgerät 200 bei einem Netzbetreiber als Mobilfunkteilnehmer an und der Netzbetreiber leitet sämtlichen Datenverkehr des Feldgeräts 200 an den Betreiber des privaten Netzes 107 weiter.

Durch die Datenbankabfrage ist es dem zentralen Server 100 möglich, eine Adressinformation 106' zu erhalten, unter der die Feldgeräteeinrichtung 200 in dem internen Netz 107 zu erreichen ist. Der Server 100 kann durch Abfragen der Datenbank 110 mittels des extrahierten Feldgerätemerkmals zu der internen Adressinformation 106' gelangen, mit der eine als gültig erkannte Befehlsinformation 105 an die Feldgeräteeinrichtung 200 weitergeleitet werden kann. Bei dem Feldgerätemerkmal handelt es ich um eine Kennung, die fest mit dem Feldgerät 200 verbunden ist. Die Feldgeräteeinrichtung 200 weist zum Bereitstellen dieses Feldgerätemerkmals die Feldgerätemerkmalträgereinrichtung 201 auf. Auf diese Information der Feldgeräteträgereinrichtung kann beispielsweise über Abfragebefehle einer Gerätebeschreibungssprache, wie beispielsweise DTM, zugegriffen werden. Die Abfrage kann aber auch über ein alphanumerisches und/oder graphisches Display oder eine entsprechende Anzeige erfolgen. Bei Verwendung eines Displays mag sich ein Anwender vor dem Feldgerät befinden und möchte auf dieses Feldgerät zugreifen. Er kann über ein Display das Feldgerätemerkmal aus der Feldgerätemerkmalträgereinrichtung auslesen oder ablesen und das abgelesene Merkmal in einen Browser in der Form einer URL mit besonderem Aufbau in einen Browser eingeben, um das Feldgerät anzusprechen. Das Feldgerätemerkmal mag nicht mit dem genutzten Kommunikationsnetz in Verbindung stehen. Es mag sich bei dem Feldgerätemerkmal um ein Nummerierungsschema handeln, das unabhängig von dem Netzwerkadressierungsschema festgelegt wird.

Das Feldgerätemerkmal ist eine feste Kennung der angeschlossenen Feldgeräteeinrichtung, die mit der Feldgeräteeinrichtung 200 im Wesentlichen unveränderlich verbunden ist und es erlaubt, die angeschlossene Feldgeräteeinrichtung 200 von anderen zumindest baugleichen Feldgeräteeinrichtungen zu unterscheiden. Das Feldgerätemerkmal kann eine Seriennummer, eine Gerätenummer oder dergleichen sein, welche beispielsweise in einer Firmware der Feldgeräte 200 fest eingetragen oder "eingebrannt" ist, die in einem speziellen Register oder speziellen Adressbereich einer Feldgeräteeinrichtung 200, also an einer standardisierten Stelle in der Feldgerätemerkmalträgereinrichtung 201 vorgesehen ist.

Die interne Adressinformation 106', die bei der Datenbankabfrage ermittelt wird, stellt eine Adressinformation dar, über die die Feldgeräteeinrichtung 200 oder das Feldgerät 200 in dem internen Netz 107 erreichbar ist. Eine entsprechende Zuordnung wird von der Verwaltungseinrichtung 109 des zentralen Servers durch entsprechende Datenbankabfragen 110 ermittelt.

Ein Datenpaket, welches innerhalb des internen Netzes 107 verteilt oder geroutet werden kann, um das Feldgerät zu erreichen, wird als internes Datenpaket 108 zusammengestellt. Das Datenpaket 108 wird an die Koppeleinrichtung 112 weitergegeben, die es wiederum der internen Datenschnittstelle 102 übergibt, um das Datenpaket 108 mittels der internen Adressinformation 106' an den tatsächlichen Ort des Feldgeräts 200 weiterzureichen.

Mittels des Zugangsservers 100 ist es somit möglich, ein ankommendes externes Datenpaket 104 und dessen externer Adressinformation 106 in eine intern routbare Adressinformation 106' zu wandeln, ohne dass die intern routbare Adressinformation 106' außerhalb des zentralen Servers 100, also im öffentlichen Netz 103, bekannt ist. Für die Wandlung wird das Feldgerätemerkmal genutzt, das in der Feldgerätemerkmalträgereinrichtung 201 des angesprochenen Feldgeräts 200 gespeichert ist. Wegen der Abschirmung des internen Datennetzes mittels des Zugangsservers 100, kann zugelassen werden, dass selbst für das Erreichen von mobilen Endgeräten 200, die Paketvermittlungstechnik im internen Netz 107 zum Verteilen des internen Datenpakets 108 genutzt wird. Der zentrale Server 100 kann neben dem Umsetzen der externen Adresse 106 in eine interne Adresse 106' auch prüfen, ob bestimmte Befehlsinformationen 105 zur Weitergabe an ein Feldgerät 200 geeignet sind und ob entsprechend auch ausreichend Rechte des Versenders des externen Datenpakets 104 bestehen, um auf das Feldgerät 200 zuzugreifen.

Somit können beispielsweise Nutzergruppen mit unterschiedlichen Berechtigungen für unterschiedliche Befehle eingerichtet werden, um individuell den Zugriff zu zumindest einem Feldgerät 200 oder aber auch zu einer Vielzahl von Feldgeräten 200 zu regeln, welche an dem internen Datennetz 107 angeschlossen sind.

In Fig. 1 ist auch der Aufbau eines Feldgeräts 200 oder einer Feldgeräteeinrichtung 200 dargestellt. Das Feldgerät 200 weist einen Elektronikbereich 202 und einen physikalischen Bereich 203 auf. Der physikalische Bereich 203 sieht die physikalischen Funktionalitäten der unterschiedlichen Messverfahren vor. Bei dem Feldgerät 200 kann es sich beispielsweise um ein Füllstandmessgerät, Temperaturmessgerät, Durchflussmessgerät, Grenzstandmessgerät oder Druckmessgerät handeln, wobei für die Physik 203 ein Radarsensor, ein Mikrowellensensor oder ein Vibrationssensor eingesetzt werden können.

Wegen Zugangsbeschränkungen der Netzbetreiber ist es nicht möglich ein Wireless Feldgerät 200 aus einem öffentlichen Netz 103 zu erreichen. Um sich mit einem Netzwerk zu verbinden, weisen die kommunikationsfähigen Feldgeräte 200 , beispielsweise die Wireless Feldgeräte 200, einen Speicher 204 mit Netzwerkmerkmalen auf, die für das Herstellen von Verbindungen und das Identifizieren des Feldgeräts im Netz genutzt werden. Diese Netzwerkmerkmale sind auf einer Netzwerkmerkmalträgereinrichtung 204 gespeichert, beispielsweise einer SIM-Karte (Subscriber Identity Module), die fest oder austauschbar mit dem Feldgerät 200 verbunden wird. Die auf der Netzwerkmerkmalträgereinrichtung gespeicherten Informationen können durch Kommunikation mit dem Feldgerät über ein Netzwerk genutzt werden, das von einem Netzwerkbetreiber, Operator oder Provider betrieben wird. Um die Feldgeräte im Netzwerk bekannt zu machen, melden sich die Feldgeräte mittels der Netzwerkmerkmale an einer Vermittlungsstelleneinrichtung oder Vermittlungsstelle des Netzwerkes an, um sich innerhalb des Netzwerkes zu registrieren und als verwendbar zu markieren. Die Vermittlungsstelleneinrichtung wird in Fig. 3 näher beschrieben. Im Falle eines UMTS oder GPRS Netzwerkes kann die Vermittlungsstelleneinrichtung die APN (Access Point Name) Einrichtung 303 des Providers sein. Die APN Einrichtung 303 wird oftmals auch lediglich als APN 303 bezeichnet obwohl der Namen eigentlich eine Adresse bezeichnet, unter der die Vermittlungsstelleneinrichtung in einem Netz erreichbar ist. Der APN ist eine Referenz auf einen GPRS Support Node (GGSN) und/oder auf einen SGSN (Serving GPRS Support Node). Ein GGSN kann über verschiedene Access Points Links zu mehreren Paketnetzen besitzen. Ein APN mag insbesondere eine Referenz auf eine IP-Adresse in einem GPRS-Backbone spezifizieren, beispielsweise auf einen SGSN oder GGSN.

Da ein APN 303 , insbesondere die APN Einrichtung 303 oder die Vermittlungseinrichtung 303, einen Zugang in ein öffentliches Netz, wie beispielsweise in das Internet ermöglichen kann, sind Betreiber eines Netzwerkes oftmals bemüht, Verbindungen, insbesondere paketorientierte Verbindungen, lediglich von dem Endgerät, also beispielsweise von dem Feldgerät, welches mit einer Netzwerkmerkmalträgereinrichtung ausgestattet ist, in Richtung des öffentlichen Netzes aufzubauen. Die Verbindungen in das öffentliche Netz gehen dabei über den APN des jeweiligen Providers, der mittels Netzwerkmerkmalträgereinrichtung oder SIM-Karte die Verbindung aufbaut. Durch das Zulassen von lediglich dem Aufbau einer Verbindung von dem Feldgerät in Richtung des öffentlichen Netzes, wird verhindert, dass das Endgerät, beispielsweise das Wireless Feldgerät, aus dem öffentlichen Netz erreichbar ist. Denn bei Aufbau einer Verbindung in Richtung des öffentlichen Netzes wird eine interne Adresskennzeichnung des Feldgerätes nicht in das öffentliche Netz kommuniziert.

Es ist wegen dieser Zugangsbeschränkung beispielsweise nicht möglich, ein Gerät, wie ein Feldgerät, Mobiltelefon oder Smartphone, über eine IP-Adresse aus einem öffentlichen Netz heraus zu erreichen. Somit ist ein Online Remote Zugriff oder Live Remote Zugriff auf ein solches Gerät aus dem öffentlichen Netz heraus nicht mittels einer in einem Paketnetz verwendeten Adressierung möglich. Es ist von dem jeweiligen Gerät, das beispielsweise eine SIM nutzt, in einem öffentlichen Netz lediglich eine Telefonnummer bekannt, die der Netzwerkmerkmalträgereinrichtung oder SIM-Karte zugeordnet ist. Jedoch ist von dem Gerät keine in einem öffentlichen Verkehrsnetz routbare Adresse, wie eine IP (Internet Protocol) Adresse bekannt. Die Wireless Geräte, Feldgeräte oder Mobiltelefone sind somit aus dem öffentlichen Netz heraus nur für Dienste erreichbar, die die Telefonnummer nutzen, die dem Feldgerät durch die Netzwerkmerkmalsträgereinrichtung zugeordnet ist. Dienste, die über die Telefonnummer verfügbar sind, sind beispielsweise ein SMS (Short Message Service) Dienst oder ein CSD-Dienst (Circuit Switched Data). Ein CSD Dienst kann beispielsweise ein Anruf, ein Fax oder eine Datenverbindung sein, die ein MODEM (Modulator und Demodulator) nutzt.

Soll also online über das Netz aus der Ferne auf ein solches Feldgerät zugegriffen werden, so ist dies nur über eine zeitorientierte Datenverbindung oder eine zeitorientierte Wählverbindung möglich. Bei einer CSD-Verbindung werden Modems über eine Wählverbindung angewählt und zeitbasiert abgerechnet. Somit erfolgt auch eine Abrechnung, wenn keine Daten übertragen werden. Eine SMS mag pro versendete Nachricht abgerechnet werden. Die Kosten, die für eine SMS oder eine CSD-Verbindung pro Datenvolumen anfallen, mögen hoch sein, verglichen mit Kosten, die für paketvermittelte Daten anfallen. Außerdem sind Wählverbindungen und eine Datenübertragung mittels eines SMS Dienstes nicht gut für eine schnelle Datenübertragung von großen Datenmengen geeignet.

Die Provider von Datennetzen erlauben den Zugriff auf die Geräte über SMS oder CSD-Verbindungen, lassen aber einen Remote Zugriff auf diese Geräte über paketorientierte Datenübertragungstechnologie nicht zu. Dadurch wird einerseits verhindert, dass beliebig von außerhalb auf Geräte zugegriffen werden kann, die dann möglicherweise schutzlos den Zugriffen ausgeliefert sind und die Nutzer werden vor einer Kostenfalle geschützt. Denn neben den SMS und CSD Diensten, die nach Minuten oder Datenvolumen abgerechnet werden, kann auch bei der Nutzung einer Paketübertragung eine Vergebührung des übertragenen Volumens stattfinden. Paketorientierte Datendienste werden oftmals über die übertragene Datenmenge abgerechnet. Wenn eine SIM Karte auf einem Feldgerät eingesetzt wird, fallen hierbei die Gebührenschemata der Mobilfunkbetreiber an. Ein solches Schema kann vorsehen, dass in einem Grundpreis zwar eine gewisse Datenmenge inbegriffen ist. Nach Überschreiten der Datenmenge wird jedoch entweder die Übertragungsgeschwindigkeit reduziert, oder ein erhöhter Volumentarif genutzt, mit dem die übertragene Datenmenge abgerechnet wird.

Das öffentliche Netz bietet meist auch Zugriff auf das Internet, welches eine IPbasierte Datenübertragung nutzt. Da die paketorientierte Datenübertragung oftmals IP-basiert ist, könnten Befehle, wie ein Ping-Befehl, genutzt werden, der es erlaubt jeden Nutzer oder dessen Gerät anzusprechen, dessen Zieladresse im Internet oder im öffentlichen Netz bekannt ist. Wäre das Gerät über das öffentliche Netz erreichbar, würde das Gerät ggf. auf einen solchen Ping-Befehl antworten. Da ein Gerät, welches auf einen Ping-Befehl antwortet, über eine solche Verbindung aus dem öffentlichen Netz heraus angegriffen werden könnte, verhindern die Netzbetreiber die Bekanntgabe der IP-Adressen mit der Folge, dass für Onlinezugriffe auf die Geräte keine Möglichkeit besteht. Da die IP-Adresse der Endgeräte im öffentlichen Netz nicht bekannt gegeben wird, ist es somit einem Nutzer nicht möglich, über eine Anwendung, über einen Abfragecomputer oder über ein Smartphone ein Feldgerät abzufragen, sowohl in guter Absicht als auch in böser Absicht. Jedoch mag es oftmals für Betreiber solcher Endgeräte wünschenswert sein, auch von außerhalb auf diese Geräte Zugriff zu haben. Mittels eines Zugangsservers 100 ist es möglich, einen Zugriff aus dem öffentlichen Netz zuzulassen.

Die Feldgeräteeinrichtung 200 weist die Feldgerätemerkmalträgereinrichtung 201, die Netzwerkmerkmalträgereinrichtung 204 und die Steuereinrichtung 205 auf. Ferner weist die Feldgeräteeinrichtung 200 die Kommunikationseinrichtung 206 oder Schnittstelleneinrichtung 206 auf, die eine Kommunikation mit dem Datennetz 107 und insbesondere mit der drahtgebundenen Schnittstelle 111 oder drahtlosen Schnittstelle 111 ermöglicht. Die Steuereinrichtung 205 ist so eingerichtet, dass sie das Einschalten des Feldgeräts 200 erkennt. Nach dem Erkennen des Einschaltens des Feldgeräts 200 liest die Steuereinrichtung 205 ein Netzwerkmerkmal, welches in der Netzwerkmerkmalträgereinrichtung 204 gespeichert ist, aus und leitet dieses Netzwerkmerkmal über die Kommunikationseinrichtung 206 an eine in Fig. 1 nicht dargestellte Vermittlungsstelleneinrichtung des Datennetzes 107 weiter.

Die Steuereinrichtung 205 kann auch eingerichtet sein, beim Erkennen des Einschaltens des Feldgeräts ein Feldgerätemerkmal aus der Feldgerätemerkmalträgereinrichtung 201 auszulesen und über die Kommunikationseinrichtung 206 ebenfalls an die nicht dargestellte Vermittlungsstelleneinrichtung weiterleiten. Alternativ oder zusätzlich kann die Steuereinrichtung 205 das ermittelte Feldgerätemerkmal an die Messgerätezugangsvorrichtung 100 oder den zentralen Server 100 weiterleiten. Zum Weiterleiten des Feldgerätemerkmals kann ein Kommunikationspfad genutzt werden, der über das interne Netzwerk 107 führt, es kann jedoch auch eine andere Verbindung benutzt werden, beispielsweise eine Verbindung in einem alternativen Netzwerk, welches parallel zum internen Netzwerk 107 betrieben wird und für die Kommunikation zwischen dem Feldgerät 200 und dem zentralen Server 100 vorgesehen ist.

Die Fig. 2 zeigt ein Flussdiagramm für ein Verfahren zum Steuern des Zugangs zu einem Messgerät 200 oder Feldgerät 200. Das Verfahren startet in dem Startzustand S200 und empfängt in dem Schritt S201 ein Datenpaket über eine externe Datenschnittstelle. In dem Schritt S202 wird eine externe Adressinformation und eine Befehlsinformation aus dem empfangenen Datenpaket oder externen Datenpaket 104 extrahiert. Ebenso wird in dem Schritt S202 parallel oder sequenziell zu dem Extrahieren der externen Adressinformation ein in dem empfangenen Datenpaket 104 enthaltenes Feldgerätemerkmal extrahiert, welches einen Rückschluss auf das anzusprechende Feldgerät 200 gibt und welches an der internen Datenschnittstelle 102 eines zentralen Servers 100 angeschlossen ist.

Im Schritt S203 erfolgt ein Prüfen mittels einer Abfrage einer Datenbank 110, ob die ermittelte Befehlsinformation an die Feldgeräteeinrichtung 200 weitergeleitet werden soll oder darf. Im Schritt S204 erfolgt eine Übersetzung des ermittelten Feldgerätemerkmals in eine interne Adressinformation 106', welche über ein internes Datennetz 107 verteilt werden kann. Im Schritt S205 wird die extrahierte Befehlsinformation, von der erkannt wurde, dass sie an die Feldgeräteeinrichtung 200 weitergeleitet werden soll bzw. weitergeleitet werden darf, an die Feldgeräteeinrichtung 200, die an der internen Datenschnittstelle 102 eines Servers 100 angeschlossen ist, über die interne Datenschnittstelle mittels einer internen Adressinformation der Feldgeräteeinrichtung weitergeleitet.

Das Verfahren endet dann in dem Endzustand S206.

Die interne Adressinformation der Feldgeräteeinrichtung 200 ist eine Kennung für den Ort, an welchem sich die Feldgeräteeinrichtung an der internen Datenschnittstelle 102 befindet, beispielsweise auch ein Port an dem internen Netz 107, der eine Verbindung zu der Schnittstelle 111 herstellt. Die interne Adressinformation kann eine Kennung für das Feldgerät 200 sein, die temporär vergeben ist. Beispielsweise ist die interne Adressinformation 200 nur solange gültig und verfügbar, solange die Feldgeräteeinrichtung 200 über die Zugangsleitung 111 oder die Zugangsverbindung 111 mit dem Datennetz 107 verbunden ist. Wird die Zugangsverbindung 111 aufgelöst und wieder neu eingerichtet, kann auch eine interne Adressinformation vergeben werden, welche sich von einer zuvor vergebenen internen Adressinformation unterscheidet. D. h. die interne Adressinformation, unter der die Feldgeräteeinrichtung 200 im internen Netz 107 erreichbar ist, ist variabel und wird von der Datenbank 110 verwaltet.

Fig. 3 zeigt ein Blockschaltbild eines Messgerätesystems 300, welches den externen Zugang zu einer Vielzahl von Feldgeräten steuert. In Fig. 3 sind drei Feldgeräte 200', 200" und 200'" dargestellt. Die Feldgeräte sind jeweils über einen drahtlosen Zugang oder mobilen Zugang eines öffentlichen Mobilfunknetzes 111', 111", 111'" mit dem internen Netz 107 verbunden. Als privates Netz 107 ist in Fig. 3 eine gesicherte Verbindung 107 dargestellt, welche über das öffentliche Netz 103 oder Internet 103 geführt ist. Alternativ zu einem solchen dem Internet überlagerten privaten Netz 107 oder VPN 107 kann das interne Netz 107, so wie in Fig. 1 dargestellt, auch als separates Netz, beispielsweise über eine Standleitung 107, realisiert sein, so dass das interne Netz 107 und das öffentliche Netz 103 physikalisch getrennte Netze sind. Die Zugangsverbindungen 111', 111", 111'" verbinden die Feldgeräte 200', 200", 200'" und insbesondere deren Netzwerkmerkmalträgereinrichtungen 204', 204", 204"', beispielsweise SIM-Karten 204', 204", 204"', die auf den Feldgeräten vorgesehen sind mit einer über den Link 302 angeschlossene Vermittlungsstelleneinrichtung 303 des Mobilfunkbetreibers, insbesondere mit dem APN 303 des Mobilfunkbetreibers. Die Zugangsverbindungen 111', 111", 111'" verlaufen über eine Basisstation 301 eines Mobilfunkbetreibers. Ohne Einschränkung der Allgemeinheit soll unter einer Vermittlungsstelleneinrichtung 303 ein APN 303 eines mobilen Funknetzes verstanden werden.

Die Vermittlungsstelleneinrichtung 303 ist der feldgerätseitige Zugangspunkt zu dem privaten Netz 107. Das private Netz ist über die Datenschnittstelle 102 mit dem zentralen Server 100 verbunden. In Fig. 3 stellt die interne Datenschnittstelle 102 auch gleichzeitig externe Datenschnittstellen 101', 101" für externe Anwendungen 304' und 304" und deren Benutzer zur Verfügung. Die externen Anwendungen 304', 304" können beispielsweise Notebooks, PCs oder Smartphones sein, mit welchen auf die Feldgeräte 200', 200", 200'" über die externen Verbindungen 101', 101", 101'", 101"" zugegriffen werden sollen. Zur Absicherung der externen Verbindungen 101', 101", 101'", 101"" ist die Firewall oder Sicherheitseinrichtung 305 an der externen Schnittstelle 101', 101"' vorgesehen. Die Firewall 305 kann aufwändige Sicherheitsmechanismen durchführen, da sie nicht wie beispielsweise ein Feldgerät durch beschränkte Rechenkapazität eingeschränkt ist.

Betreiber von Mobilfunknetzen bieten beispielsweise zum Aufbau von M2M Netzen (Maschine-to-Maschinen Netzen) für Kunden die Dienstleistung an, eigene APNs zu betreiben. Da diese APNs 303 oder Vermittlungsstelleneinrichtungen 303 als firmeneigene APNs betrieben werden, wodurch sichergestellt ist, dass von außen nicht auf diese APNs zugegriffen werden kann, sind die Betreiber auch bereit, diese APNs in einem Paketübertragungsmodus zu betreiben. Bei dem Betrieb in einem Paketübertragungsmodus ist es möglich, über ein Netz, beispielsweise das interne Netz 107, auf von dem APN 303 veröffentlichte Adressen der Feldgeräte 200', 200", 200'" zuzugreifen, ohne dabei SMS oder CSD-Verbindungen in Kombination mit Telefonnummern der Feldgeräte verbinden zu müssen. Durch die Freigabe des Paketübertragungsmodus kann beliebig auf die Feldgeräte 200', 200", 200'" zugegriffen werden und somit kann beliebige Information mit den Feldgeräten ausgetauscht werden. Der Paketübertragungsmodus des APN 303 kann über spezielle Befehle oder über eine GPRS Bedienoberfläche seitens des zentralen Servers 100 an- oder abgeschaltet werden. Durch das An- oder Abschalten oder das Umschalten des Paketübertragungsmodus kann festgelegt werden, ob die Feldgeräte 200', 200", 200'" über veröffentlichte Adressen, beispielsweise IP-Adressen, in dem internen Netz 107 erreichbar sein sollen oder lediglich über eine CSD/SMS-Verbindung. Ist der Paketübertragungsmodus angeschaltet, sind die IP-Adressen erreichbar, ist er ausgeschaltet, sind die IP-Adressen nicht erreichbar und auf die Feldgeräte kann lediglich über eine CSD- oder SMS-Verbindung zugegriffen werden. Die von den Netzbetreibern freigegebenen APNs 300 oder die firmeneigenen APNs 300 sind an das private Netz 107 oder die Standleitung 107 an das private Netz einer Firma angeschlossen. So kann dann aus dem privaten Netz 107 eine Verbindung zu den Feldgeräten 200', 200", 200'" aufgebaut werden. Aus einem öffentlichen Netz 103, beispielsweise aus dem Internet, sind diese Adressen jedoch nicht erreichbar.

Der zentrale Server 100 kann die Rolle einer Netzzugangssteuerung übernehmen und das private Netz 107 von dem öffentlichen Netz abtrennen. Somit kann ein überwachter Fernzugriff oder Remotezugriff auf die Feldgeräte über das Internet 103 ermöglicht werden. Da dieser Zugriff über das Internet immer über den zentralen Server 100 erfolgt, kann gleichzeitig auch das Sicherheitsniveau eingestellt werden, mit dem die Firma, die den Server betreibt, es zulässt, auf die Feldgeräte oder Endgeräte 200', 200", 200'" von außen zuzugreifen. Der Softwareaufwand oder Rechenaufwand zur Bereitstellung der Sicherheitsfunktionen muss somit nicht auf den Feldgeräten vorgesehen werden und ist auf den zentralen Server ausgelagert, weshalb auch der Hardwareaufwand an den Feldgeräten 200', 200", 200'" gering gehalten werden kann.

Der zentrale Server 100 ist über das öffentliche Netz 103 oder Internet 103 erreichbar. Dieser Server kann ein leistungsfähiger Rechner sein und kann daher aufwändige Firewalltechnik und Sicherheitsmechanismen realisieren. Auch kann der Sicherheitsstandard den jeweils gültigen und neuesten Erkenntnissen angepasst werden. Von Anwendungen 304', 304", die aus dem öffentlichen Netz, also sozusagen von außen, von einem Standard-PC, Tabletcomputer, Smartphone oder irgendeinem anderen internetfähigen Gerät 304', 304" aus auf die Feldgeräte zugreifen wollen, richten ihre Anfragen an den zentralen Server oder Netzzugangsserver 100. Der Server 100 empfängt die Anfragen in Form von öffentlichen Datenpaketen 104. Der Server wertet die Anfrage 104 aus und fordert ggf. von den Anwendungen 304', 304" oder deren Benutzern an, sich zu authentifizieren. Nach einer erfolgreichen Authentifizierung leitet der Server 100 die Anfrage 104, insbesondere eine Befehlsinformation 105, welche in der Anfrage 104 enthalten ist, über das interne Netz 107 oder in einem einfachen Fall über eine Standleitung 107 zu dem APN 303 eines Mobilfunkbetreibers weiter. Diese Verbindung zwischen dem zentralen Server 100 und dem APN 303 kann ebenfalls mit ausreichenden Sicherheitsmechanismen ausgestattet werden. In dem privaten Netz 107, insbesondere in der Verbindung zwischen zentralem Server 100 und APN 303 kann als Sicherheitsmechanismus beispielsweise IP Sec, TLS oder SSL eingesetzt werden. Da die Sicherheitsmechanismen von dem zentralen Server durchgeführt werden, kann der Hardware- und Softwareaufwand für Sicherheitsmechanismen in dem Feldgerät 200', 200", 200'" selbst entfallen.

Der APN 303 des Providers ist mit den Feldgeräten 200', 200", 200'" verbunden. Die Verbindung zwischen dem APN 303 und den Feldgeräten 200', 200", 200'" ist eine paketorientierte Datenverbindung und kann bidirektional ausgeführt sein. D. h. der APN 303 veröffentlicht in dem privaten Netz 107 die IP-Adressen oder Netzwerkadressinformationen 106', unter denen jeweils die Feldgeräte 200', 200", 200'" zu erreichen sind.

Die IP-Adressen selbst, die den Feldgeräten zugeordnet sind, werden von dem APN an den zentralen Server 100 berichtet, sind jedoch in dem öffentlichen Netz 103, beispielsweise dem Internet, nicht sichtbar. Sollen die Feldgeräte angesprochen werden, muss die Verbindung über den zentralen Server stattfinden, der die IP-Adressen der Feldgeräte vor dem öffentlichen Netz versteckt. Zum Herstellen der Verbindung findet im zentralen Server neben einer Authentifizierung auch eine Übersetzung von öffentlichen Adressen in die interne Adressinformation 106' statt.

Über die in Fig. 3 nicht dargestellte Übertragungsmodusumschalteeinrichtung kann der zentrale Server 100 nicht nur den Paketübertragungsmodus umschalten, sondern auch bestimmen, ob die interne Adressinformation verteilt werden darf, also ob der APN 303 die internen IP Adressen an den Server 100 weitergeben darf.

Von den Anwendungen 304', 304", die auf ein Feldgerät aus dem Internet 103 zugreifen wollen, kommt eine Anfrage 104, welche eine Befehlsinformation 105 und eine öffentliche Adresse 106 aufweist, beispielsweise eine URL 106. Dabei ist die URL so aufgebaut, dass sie einerseits den Server im öffentlichen Netz adressiert, andererseits aber auch eine Kennung enthält, um deutlich zu machen, welches der Vielzahl von Feldgeräten angesprochen werden soll. In einem Ausführungsbeispiel kann ein öffentliches Datenpaket 104 auch eine Authentifizierungsinformation enthalten, die automatisch geprüft werden kann, ohne einen speziellen Authentifizierungsbildschirm zur Verfügung zu stellen. Enthält das Datenpaket 104 keine Authentifizierungsinformation, so muss die Authentifizierung nach dem Empfang des Datenpakets 104 gesondert, beispielsweise über eine gesonderte Authentifizierungsmaske oder einen gesonderten Authentifizierungsbildschirm, stattfinden. Zum Authentifizieren kann ein zertifikatsbasierter Zugangsmechanismus oder auch Systeme mit verschiedenen "Token"-Prinzipien genutzt werden. Bei einer Authentifizierung an einem Bildschirm oder an einer Benutzeroberfläche oder an einer GUI kann eine SSL (Secure Sockets Layer) Verschlüsselung oder TLS-(Transport Layer Security) Verschlüsselung in verschiedenen Stufen genutzt werden, beispielsweise mit 128 Bit oder 256 Bit Verschlüsselung.

Der APN 303 stellt dem Server 100 sämtliche über ihn erreichbare Adressen 106' der Feldgeräte 200', 200", 200'" zur Verfügung, so dass dem Server 100 bekannt ist, welche Feldgeräte über ihn erreicht werden können.

Die öffentliche Adressinformationen 106 oder die URL 106 kann einen besonderen Aufbau aufweisen, der es dem Server ermöglicht, aus der URL ein Feldgerätemerkmal zu extrahieren, mit dem das Feldgerät 200', 200", 200'" angesprochen werden kann. Die URL kann die Form aufweisen *www.Feldgerätemerkmal.ÖffentlicheAdressinformation.*

Die öffentliche Adressinformation kann eine Netzwerkadresse oder eine Domain sein, beispielsweise der Firma, welche den Zugangsserver 100 betreibt und welche einen Zugang auf die Feldgeräte 200', 200", 200'" zur Verfügung stellen möchte. Beispielsweise kann die Netzwerkadresse oder der öffentliche Teil der URL die Bezeichnung *vega.com* aufweisen, um einen Server 100 zu erreichen, der von der Firma VEGA betrieben wird. Die gesamte Adresse kann dann das Format *www.Feldgerätemerkmal.vega.com* aufweisen. Als Feldgerätemerkmal kann die Seriennummer des zugehörigen Feldgeräts 200', 200", 200'" oder die IMEI des Feldgeräts verwendet werden. In diesem Fall sieht dann die öffentliche Adressinformation 106 oder die URL 106 beispielsweise wie *www.Seriennummer.vega.com* oder *www.IMEIdesFeldgeräts.vega.com* aus. Aus dieser URL kann beispielsweise durch Mustererkennungsverfahren der zentrale Server das Feldgerätemerkmal eines Feldgeräts extrahieren, welches auf der Feldgerätemerkmalträgereinrichtung 201 gespeichert ist. Ein solches Feldgerätemerkmal kann insbesondere die Seriennummer oder die IMEI des Feldgeräts sein, das von außen angesprochen werden soll. In einem Beispiel weiß der Server 100, dass das Feldgerätemerkmal immer zwischen dem ersten und zweiten Punkt der URL 106 enthalten ist.

Das extrahierte Feldgerätemerkmal 201 kann mit den Daten, die von dem APN 303 geliefert werden, abgeglichen werden und die interne Adressinformation 106', beispielsweise die interne IP-Adresse oder die private IP-Adresse der Feldgeräte 200', 200", 200"', kann herausgefunden werden. Das Abgleichen kann beispielsweise über eine Datenbankabfrage 110 erfolgen. Der Server 100 kann, nachdem er die interne Adressinformation 106' ermittelt hat, die Anfrage 104, insbesondere die in der Anfrage 104 oder in dem Anfragepaket 104 enthaltene Befehlsinformation 105 als ein internes Datenpaket 108 über den APN 303 zu dem jeweiligen Feldgerät 200', 200", 200'" weiterleiten. Der Server 100 kann, ohne dass der Hardwareaufwand oder Softwareaufwand in dem Feldgerät 200', 200", 200'" geändert werden muss, einen hohen Sicherheitsstandard gewährleisten und auch den gefürchteten Zugriff auf den APN 303 zulassen.

Eine Verknüpfung zwischen dem Feldgerätemerkmal, welches in der Feldgerätemerkmalträgereinrichtung 201 gespeichert sein mag, und einem Netzwerkmerkmal, unter dem das Feldgerät 200', 200", 200'" dem APN bekannt ist, kann in der Datenbank 110 beispielsweise zum Herstellzeitpunkt des Feldgeräts 200', 200", 200'" erzeugt werden. In anderen Worten bedeutet das, dass ein Feldgerät ein Feldgerätmerkmal aufweist, das dem Feldgerät im Wesentlichen individuell zugeteilt worden ist, durch das das Feldgerät von anderen Feldgeräten unterscheidbar ist. Das Feldgerätemerkmal ist in dem Feldgerätemerkmalträger 201 gespeichert.

Ebenfalls zum Herstellzeitpunkt wird dem Feldgerät ein Netzwerkmerkmal zugeordnet und in der Netzwerkmerkmalträgereinrichtung 204 abgespeichert. Das Netzwerkmerkmal wird dem Feldgerät im Fall eines mobilen Netzes, beispielsweise durch den Einbau einer SIM-Karte, zugeordnet, während das Feldgerätemerkmal beispielsweise in der Firmware oder in einem Adressbereich des Feldgeräts eingebrannt ist oder fest gespeichert ist. Die Netzwerkmerkmalträgereinrichtung 204 kann als SIM-Einschub vorgesehen sein, wodurch die SIM-Karte jederzeit auswechselbar ist und so eine Neuzuordnung zwischen Netzwerkmerkmal und Feldgerätemerkmal hergestellt werden kann. Dies kann beispielsweise der Fall sein, wenn ein neuer Netzzugangsstandard für den Netzzugang 111 eingeführt werden soll, durch den sich die Übertragungstechnik 111 und die Identifikationstechnik ändern mag, jedoch das Feldgerätemerkmal nicht geändert wird. Ein solcher Austausch einer SIM-Karte kann beispielsweise nötig werden, wenn auf eine neue Übertragungstechnik beispielsweise von GSM auf UMTS oder von UMTS auf GSM übergegangen werden soll. Die Verknüpfung zwischen dem Netzwerkmerkmal und dem Feldgerätemerkmal kann aber auch während der Laufzeit des Geräts erzeugt werden.

Um bei einer Änderung der Verknüpfungen immer noch eine korrekte Zuordnung einer Kombination des Netzwerkmerkmals, Feldgerätemerkmals und/oder der Adressinformation zu haben, kann, wenn eine Änderung im System erkannt wird, auf verschiedenen Mechanismen zurückgegriffen werden, um die Zuordnung zu aktualisieren. Einerseits kann nach dem Erkennen einer Veränderung eine einmalige manuell ausgelöste Update-Kommunikation zum zentralen Server stattfinden. Andererseits kann ein automatisches Aktualisieren oder Updaten der Zuordnung mittels der Übertragung der Daten, beispielsweise des Netzwerkmerkmals und des Feldgerätemerkmals, insbesondere der Seriennummer, vom Feldgerät an den zentralen Server durchgeführt werden. Ferner kann die Zuordnung über eine Benutzeroberfläche am zentralen Server manuell eingegeben werden. Darüberhinaus ist es möglich, automatisch die Zuordnung am zentralen Server durch ein regelmäßiges zyklisches Abgleichen zu aktualisieren, beispielsweise initiiert durch das Feldgerät.

Als Kennzeichen für das physikalische Feldgerät oder als Feldgerätemerkmale kommen die Seriennummer oder die Herstellnummer des Feldgeräts in Frage. Als Netzwerkmerkmal können GSM-Parameter, wie IMEI, ICCID, IMSI (International Mobile Subscriber Identity), verwendet werden. Die Herstellung der Verknüpfung des Feldgerätemerkmals, des Netzwerkgerätemerkmals und/oder der Adressinformation, beispielsweise URL, kann zur Laufzeit des Geräts durchgeführt werden, also während das Gerät angeschaltet ist, oder zu dem Zeitpunkt, wenn die Adressinformation benötigt wird, aber auch zum Herstellzeitpunkt.

Der Anwender kann somit beispielsweise über einen Standardinternetbrowser eine Anfrage an eine URL eingeben, welche ein spezifisches Feldgerätemerkmal des anzusprechenden Feldgeräts enthält. Dieses Feldgerätemerkmal wird in eine URL verpackt. Diese URL oder externe Adressinformation wird im Hintergrund von dem Zentralserver 100 in die interne Adressinformation 106' des Feldgeräts übersetzt und an das interne Netz weitergeleitet.

Das Feldgerät kann dann die Anfrage 108, insbesondere die in der Anfrage 108 enthaltene Befehlsinformation 105, in einem Webserver annehmen, der auf dem Feldgerät 200', 200", 200'" integriert ist und beispielsweise auf der Steuereinrichtung 205 läuft, und eine Antwort an die entsprechende Anfrageadresse zurückgeben. Diese Antwort des Feldgeräts wird an den zentralen Server 100 mit einer internen Adresse zurückgehen. Der zentrale Server hat wiederum die Information, von welcher externen Adresse die Anfrage stammt und sorgt für das korrekte Weiterleiten der Daten. Die Anwendung 304', 304", die das Feldgerät anspricht, muss von der hinterlegten IT-Infrastruktur und insbesondere von dem Zusammenwirken des APNs und des zentralen Servers keine Kenntnis haben. Sie muss lediglich eine ihr beispielsweise von der Betreiberfirma des internen Netzes 107 bereitgestellte externe Adressinformation 106 oder die URL 106 kennen, um das zugehörige Feldgerät anzusprechen. Über das in der URL enthaltene Merkmal, insbesondere das Feldgerätemerkmal, welches zu dem anzusprechendem Feldgerät gehört, kann die Anfrageadresse dem Feldgerät zugeordnet werden. Dieses Feldgerätemerkmal kann die Seriennummer oder aber auch eine andere Identifizierung beinhalten. Das Feldgerätemerkmal kann beispielsweise aus einem Kundennamen und einer Gerätenummer zusammengesetzt sein oder ein Feldgeräte-Tag und eine Seriennummer aufweisen. Es kann auch die IMEI des Modems, welches in der Netzwerkmerkmalträgereinrichtung 104 vorgesehen ist, eine ICCID der verwendeten SIM-Karte 204 oder ein Namesein, den eine Anwendung für das Feldgerät verwendet. So können die externen Adressinformationen 106 beispielsweise aussehen wie
*www.Kundenname.Gerätenummer.vega.com*
*www.Feldgeräte-Tag.Seriennummer.vega.com*
*www.IMEIdesModems.vega.com*
*www.ICCIDderSIMkarte.vega.com*
*www.meinName.vega.com*

Als Feldgerätemerkmal kann auch ein Netzwerkmerkmal genutzt werden, so dass eine Umsetzung von Feldgerätemerkmal auf Netzwerkmerkmal entfallen kann. Die IMEI beispielsweise kann unveränderlich im Feldgerät eingebracht sein, wenn eine Netzmerkmalträgereinrichtung im Wesentlichen nicht lösbar sondern fest eingebaut ist. In diesem Fall kann das Feldgerätemerkmal gleich dem Netzwerkmerkmal sein und beispielsweise wird die IMEI dann als ein Feldgerätemerkmal genutzt. Weiterhin kann eine SIM-Karte auch fest verbaut werden und somit eine feste Zuordnung zwischen ICCID und Feldgerätemerkmal bewirken. Dann kann auch die ICCID als Feldgerätemerkmal genutzt werden, da das Merkmal und das Gerät im Wesentlichen untrennbar verbunden sind.

Im Falle des Verwendens von lediglich einem Netzwerkmerkmal und keinem Feldgerätemerkmal in der Adresse 106 kann es zu einem Fehlverhalten kommen, wenn nicht konsequent die Datenbank 110 abgeglichen wird. Leicht kann beispielsweise eine SIM-Karte von einem Feldgerät zu einem anderen übertragen werden, so dass die Zuordnung des Netzwerkmerkmals zur Adressinformation nicht mehr aktuell ist und nicht mehr das gewünschte Feldgerät anspricht. Das Verwenden eines Feldgerätemerkmals zum Ansprechen des Feldgeräts kann eine höhere Zuverlässigkeit zur Verfügung stellen, da das Ändern eines Feldgerätemerkmals, welches mit dem Feldgerät fest verbunden ist, sehr unwahrscheinlich ist.

Die Zuordnung von externer Adressinformation 106 zum Feldgerät 200', 200", 200"', insbesondere zu dem Feldgerätemerkmal und/oder zu dem Netzwerkmerkmal, kann auch durch die Anwendung 304', 304" über eine Eingabemaske, welche der Server 100 bereitstellt, von einem Benutzer der Anwendung selbst aktualisiert werden. So ist es beispielsweise möglich, ein Netzwerkmerkmal, beispielsweise bei Austausch einer SIM-Karte, für ein Feldgerät neu zu vergeben, indem der Benutzer dem Server lediglich mitteilt, dass sich für ein besonderes Feldgerät das Netzwerkmerkmal geändert hat. Gleiches gilt für das Feldgerätemerkmal.

Das Feldgerätemerkmal, beispielsweise die Seriennummer, kann beispielsweise auf immer der gleichen Internetseite eingegeben werden. In anderen Worten mag das bedeuten, dass die Auswahl des Feldgeräts nicht über das Extrahieren von Informationen, die dem anzusprechenden Feldgerät zugeordnet sind, aus der URL erfolgt, sondern, dass über eine Eingabemaske auf einer Website mittels der Eingabe eines Feldgerätemerkmals oder eines Netzwerkmerkmals auf Daten des entsprechenden Feldgeräts zugegriffen wird. Der Schritt des Extrahierens des Feldgerätemerkmals kann dann entfallen. Insbesondere ist der Schritt des Extrahierens dann in zwei Teilschritte zerlegt, die vorsehen, das Anmelden an einer Eingabemaske samt dem Authentifizierung und/oder Autorisieren und das Ermitteln des Feldgerätemerkmals durch Auswerten der Eingabe in der entsprechenden Eingabemaske. Der Server, der die Eingabemaske bereitstellt, leitet dann die Anfragen an das entsprechende Gerät weiterleiten. Eine Authentifizierung kann über Passwort- oder Token-System erfolgen.

Es mag eine Idee der Erfindung sein, eine bidirektionale Verbindung über eine paketorientierte Datenverbindung oder über ein paketorientiertes Datennetz zu dem Feldgerät aufzubauen, die zwar ein unsicheres offenes internes Netz 107 nutzt, das aber von einem Zugangsserver 100 geschützt wird.

Sollte der Sicherheitsstandard vernachlässigbar sein, könnte auch die vom APN 303 vergebene IP-Adresse für ein Feldgerät veröffentlicht werden. Jedoch kann im Wesentlichen nur durch eine gesicherte Verbindung 107 zwischen APN 303 und zentralem Server 100 gewährleistet werden, dass der Zugriff auf die Endgeräte 200, 200'. 200", 200"' mit den internen privaten Adressen 106' durch den zentralen Server 100 und dem dort installierten Zugriffsschutz nicht zu einem erhöhten Datenaufkommen führt. Die IP-Adressen sind zwar im Prinzip öffentlich, können aber nicht von der einer Gegenstelle im öffentlichen Netz angesprochen werden. Ein normaler öffentlicher APN 303 sperrt solche Anfragen. Die Zugangssteuerung mittels des zentralen Servers 100 erlaubt es jedoch dem APN 303 die Adressen der Endgeräte 200, 200', 200", 200'" zu veröffentlichen. Das Veröffentlichen der IP Adressen kann der zentrale Server 100 über die Übertragungsmodusumschalteeinrichtung eines APN 303 einschalten oder ausschalten. So hat der zentrale Server nicht nur die Möglichkeit zwischen einen Paketübertragungsmodus und einem leitungsvermittelten Übertragungsmodus umzuschalten, sondern auch noch das Veröffentlichen der internen Adressinformation zu veranlassen. Die Modi können unabhängig voneinander umgeschaltet werden. Das vollständige Veröffentlichen der internen Adressinformation in dem öffentlichen Netz könnte das Sicherheitsrisiko erhöhen und es könnte eine Kostenfalle für die SIM-Kartenbesitzer entstehen.

In einer alternativen Ausführungsform könnte der APN 303 die Funktionen des zentralen Servers 100 aufweisen und für die Zuordnung der internen Adressen zu Feldgerätemerkmalen oder Netzwerkmerkmalen sorgen, welche aus externen Adressen extrahiert sind. In einem anderen Beispiel könnte auch der zentrale Server die Funktion eines APNs übernehmen. In solch einem Fall würde das interne Datennetz 107 eine serverinterne Verbindung innerhalb des Servers 100 sein.

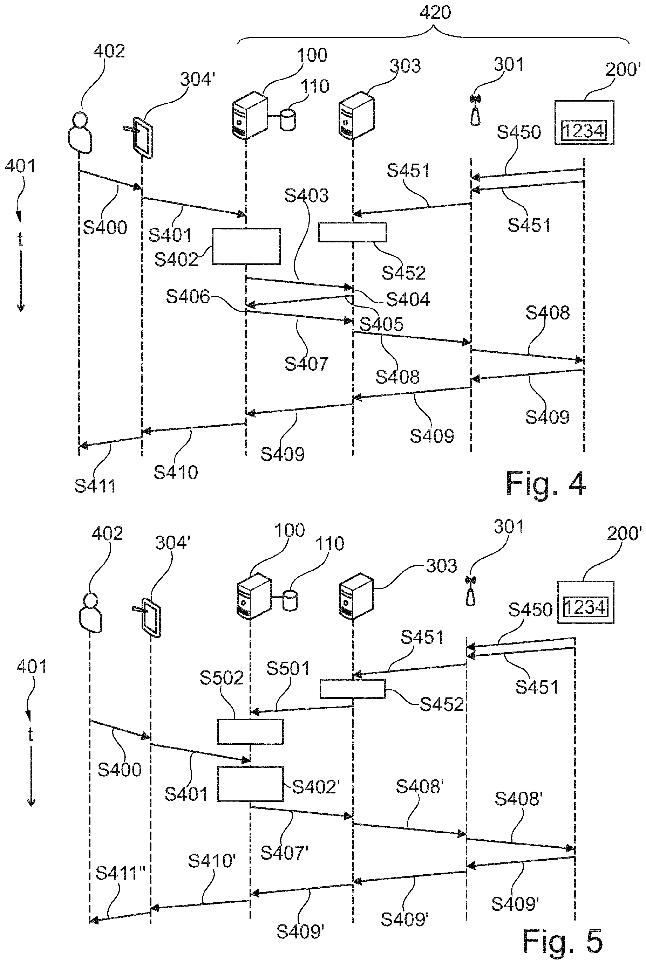

Fig. 4 zeigt ein Nachrichtenflussdiagramm für das Messgerätesystem der Fig. 3, bei dem der Zusammenhang zwischen Adressinformation und Feldgerätemerkmal zur Laufzeit oder bei Bedarf ermittelt wird, gemäß einem exemplarischen Ausführungsbeispiel der vorliegenden Erfindung. Bei diesem Nachrichtenflussdiagramm ist entlang der Zeitachse 401 der Verlauf eines Austausches von einem Nachrichtenpaket zwischen den verschiedenen Komponenten des Messsystems 300 dargestellt. In dem Nachrichtenflussdiagramm zeigt die erste Spalte einen Benutzer 402, der beispielsweise einen Tablet PC 304' als Anwendung bedient.

Bei Einschalten des Feldgeräts 200' bucht sich das Feldgerät 200' im Schritt S450 bei einer ihm zugeordneten Basisstation 301 eines Mobilfunkbetreibers ein. Danach baut das Feldgerät 200', welches das Einschalten erkannt hat, eine Verbindung über die Basisstation 301 mit einer dem Feldgerät zugeordneten Vermittlungsstelleneinrichtung 303 auf. Dabei mag sich das Feldgerät bei einer in Fig. 3 nicht dargestellten Registriereinrichtung in der Vermittlungsstelleneinrichtung 303 anmelden oder registrieren. Bei der Registrierung teilt das Feldgerät 200' der Vermittlungsstelleneinrichtung 303 oder dem APN 303ebenfalls im Schritt S451 sein Netzwerkmerkmal oder seine Vielzahl von Netzwerkmerkmale mit. Über das Netzwerkmerkmal aus der Netzwerkmerkmalträgereinrichtung 204', beispielsweise eine IMEI aus einer SIM-Karte, kann der APN 303 die SIM-Karte und damit indirekt auch das Feldgerät 200' identifizieren. Mit diesen Informationen, insbesondere mit dem Netzwerkmerkmal, kann der APN 303 im Schritt S452 feststellen, ob das Gerät 200' bei dem APN 303 bekannt ist und eine Verbindung mit dem APN aufbauen darf. Ist dies der Fall, kann der APN 303 feststellen, ob das Gerät 200' auch tatsächlich mit dem APN verbunden ist, also ob das Feldgerät 200' eingeschaltet ist. Ebenfalls im Schritt S452 teilt der APN 303 dem Feldgerät 200' eine IP-Adresse zu. Insbesondere wird einem Zugangsport oder einem Ende einer Netzwerkverbindung im privaten Netz 107 diese interne Adressinformation oder private Adressinformation zugeteilt.

In anderen Worten weist nach der Registrierung des Feldgeräts 200' eine Informationsdatenbank in dem APN 303 eine Zuordnung einer privaten Adresse, beispielsweise einer privaten IP-Adresse, zu einem oder einer Vielzahl von Netzwerkmerkmalen auf, welche aus der Netzwerkmerkmalträgereinrichtung 201 aus dem Feldgerät 200' mit der Seriennummer 1234 ausgelesen wurden. Der APN 303 erkennt nach dem Einschalten und Registrieren des Feldgeräts 200' eine Zuordnung der internen Adressinformation oder privaten Adressinformation für das Feldgerät 200' zu einem Netzwerkmerkmal, welches mit dem Feldgerät 200' verbunden ist. Beispielsweise erkennt der APN 303 eine Zuordnung einer privaten IP-Adresse zu einer IMEI des Feldgeräts 200'. Oder in anderen Worten, der APN 303 erkennt einen Zuordnung zwischen Informationen der Schicht 3 des OSI Modells. Es mag dem APN 303 jedoch nicht möglich sein, eine Zuordnung eines Feldgerätemerkmals zu einer IP-Adresse zu erkennen. Das Feldgerätemerkmal wird von Protokollschichten verwaltet, die über der Schicht 3 liegen und so kann der APN 303 das Feldgerätemerkmal nicht wahrnehmen. Es mag jedoch in einem Ausführungsbeispiel vorgesehen sein, eine Vermittlungsstelleneinrichtung, wie einen APN 303 so einzurichten, dass ein Zugriff auf Informationen höherer Protokollschichten stattfinden kann und dass der APN eine Verwaltung der Zuordnung von IP-Adressen und Feldgerätemerkmalen übernehmen kann. Der APN 303 kennt nach einer solchen Erweiterung seiner Funktionen firmenspezifische Feldgerätemerkmale, obwohl diese nicht genormt oder allgemein gängig sind.

Im Schritt S400 erfolgt unabhängig von der Registrierung in den Schritten S450, S451, S452, eine Eingabe der öffentlichen Adressinformation oder URL 106 durch den Benutzers 402 in den Tablet PC 304' oder in die Anwendung 304'. Beispielsweise gibt der Benutzer die URL *www.1234.vega.com* ein, um das Feldgerät 200' mit der Seriennummer 1234 abzufragen, welche in der Feldgerätemerkmalträgereinrichtung 201' des Feldgeräts 200' gespeichert ist. Zur Unterscheidung der Feldgeräte 200', 200", 200'" sind in den Feldgerätemerkmalträgereinrichtungen 201', 201", 201'" die unterschiedlichen Seriennummern abgespeichert. Das erste Feldgerät 200' weist die Seriennummer 1234 auf, das zweite Feldgerät 200" weist die Seriennummer 1235 auf und das dritte Feldgerät 200'" weist die Seriennummer 1236 auf. Die Eingabeeinrichtung 304', beispielsweise der Tablet PC und insbesondere eine Anwendung auf dem Tablet PC 304', generiert aus der Eingabe der URL 106 *www.1234.vega.com* ein Datenpaket 104, welches die Anfrage in Form einer Befehlsinformation 105 aufweist und die Adressinformation 106 in der Form *www.1234.vega.com* aufweist. Diese Anfrage wird im Schritt S401 generiert und über das öffentliche Netz 103 an den zentralen Server 100 weitergeleitet. Zum Weiterleiten kommt beispielsweise der DNS (Domain Name Service) Dienst zum Einsatz. Der Server 100 ist beispielsweise über den Netzwerkanteil oder Domainnamen *vega.com* in dem öffentlichen Netz 103 zu erreichen. Der private Anteil *www.1234* der öffentlichen Adresse 106 kann als eine Unteradressierung aufgefasst werden, welche der Betreiber des zentralen Servers 100 selbst vergeben kann. Die Eingabe wird im Schritt S401 über das öffentliche Netz an den Server 100 übertragen.

Im Schritt S402 ermittelt der Server 100 den Aufbau des an ihn gesandten Datenpakets 104 und extrahiert den internen Netzwerkanteil *www.1234* als eine private Adressinformation. Aus dieser privaten Adressinformation extrahiert der zentrale Server die Seriennummer 1234 des gewünschten Feldgeräts 200' als Feldgerätemerkmal. Danach ermittelt der Server im Schritt S402, ob die Seriennummer 1234 einem Feldgerät 200' zugeordnet ist, welches von dem Server 100 und insbesondere von der Firma betreut wird, die den Server 100 betreibt. In einem anderen Beispiel kann alternativ oder zusätzlich der Server 100 auch ermitteln, ob der Benutzer 402 berechtigt ist, auf die Feldgeräteeinrichtung 200' mit der Seriennummer 1234 zuzugreifen.

Nachdem der zentrale Server im Schritt S402 festgestellt hat, dass die Seriennummer 1234 einem Gerät zugeordnet ist, ermittelt der zentrale Server aus dem Feldgerätemerkmal, welches aus der Adressinformation extrahiert worden ist, zugehörige interne Adressinformationen. Um diese Übersetzung vornehmen zu können, wurde beispielsweise bei einem Herstellprozess oder bei einem Vorgang, in dem der Netzbetreiber des privaten Netzes 107 das Feldgerät 200' in seine Betreuung aufgenommen hat, in der Datenbank 110 des zentralen Servers 100 eine Zuordnung des angefragten Feldgerätemerkmals zu einem zugehörigen Netzwerkmerkmal gemacht. So wird bestimmt, ob dem Feldgerätemerkmal ein Gerät zugeordnet ist Als ein Netzwerkmerkmal kommt beispielsweise die IMEI oder die ICCID in Frage.

Mithilfe des aus der Datenbank 110 ermittelten Netzwerkmerkmals wird in dem Schritt S403 von dem zentralen Server der zugeordnete APN angefragt, ihm eine zu dem ermittelten Feldgerätemerkmal und dem daraus ermittelten Netzwerkmerkmal zugehörende interne Adressinformation 106' zur Verfügung zu stellen. Beispielsweise fordert der Server 100 von dem APN eine IP Adresse der ermittelten IMEI oder ICCID an.

Der APN 303 ermittelt im Schritt S404, ob es zu dem angefragten Netzwerkmerkmal ein registriertes Feldgerät 200' gibt und wenn es dieses gibt, dessen Adressinformation, die zuvor im Schritt S452 von dem APN 303 ermittelt wurde. Als Adressinformation kommt beispielsweise eine IP-Adresse, die dem Feldgerät 200' zugeordnet ist, in Frage. Nachdem eine zugehörige IP-Adresse zu dem angefragten Feldgerätemerkmal ermittelt worden ist, stellt der APN 303 im Schritt S405 diese IP-Adresse an den zentralen Server 100 zur Verfügung. Mithilfe der nun ermittelten internen IP-Adresse 106' kann der zentrale Server 100 im Schritt S406 ein internes Datenpaket 108 zusammensetzen, bei dem die ermittelte interne IP-Adresse 106' mit der empfangenen Befehlsinformation 105 verknüpft wird.

Im Schritt S407 wird das interne Datenpaket 108 als Anfrage zunächst an den APN 303 weitergeleitet. Der APN 303 dient als Router zwischen dem Mobilfunknetz 111, 111', 111", 111" und dem zentralen Server 100. Er 303 vermittelt die von ihm 303 bereitgestellten IP Adressen. Nachdem der APN 303 das interne Datenpaket 108 erhalten hat und die interne Adressinformation 106' ausgewertet hat, leitet der APN im Schritt S408 das interne Datenpaket 108 über die Basisstation 301 an das zugehörige Feldgerät 200' weiter. Der APN 303 kann aufgrund der vergebenen IP-Adressen analysieren, welcher Mobilfunkteilnehmer 200, 200', 200", 200'" das Datenpaket 108 erhalten soll

Das Feldgerät 200' empfängt die Anfrage des Datenpakets und kann im Schritt S409 über die Basisstation 301, dem APN 303 die Antwort an den zentralen Server 100 weiterleiten. Das Feldgerät oder die Feldgeräteeinrichtung nutzt für die Antwort die interne IP-Adresse oder zumindest die URL des zentralen Servers 100, die es/sie kennen muss. Diese kann beispielsweise in der Anfrage S406 mit dem Datenpaket übertragen werden. Der Server wiederum ermittelt die zu der Antwort gehörende öffentliche IP-Adresse der Anfrageeinrichtung 304' und antwortet im Schritt S410 mit einer öffentlichen Adresse auf die Anfrage der Anwendung 304'. So kann dann im Schritt S411 ein Benutzer die angefragten Daten lesen, beispielsweise einen von dem Feldgerät 200' bereitgestellten Messwert.

Der Benutzer 402 muss für seine Anfrage kein Wissen über die interne Struktur 420 des Dienstebetreibers bzw. des Betreibers des internen Netzes 107 haben. Es reicht lediglich die Netzwerkadresse des zentralen Server 100 in dem öffentlichen Netz zu kennen und eine Kenntnis des entsprechenden Feldgeräteparameters, wie beispielsweise einer Seriennummer und/oder eines Netzwerkmerkmals des Feldgeräts 200' zu haben. Ferner muss der Benutzer wissen, wie aus dem Feldgerätemerkmal bzw. aus dem Netzwerkmerkmal eine öffentliche Adressinformation 106 oder eine URL zur Abfrage des zugehörigen Feldgeräts gebildet wird.

Fig. 5 zeigt ein Nachrichtenflussdiagramm zur Abfrage eines Feldgeräts 200' mit einer von dem Server 100 gepflegten Datenbank 110 mit gespeicherten internen Adressinformationen gemäß einem exemplarischen Ausführungsbeispiel der vorliegenden Erfindung. Wie bereits in Fig. 4 dargestellt, baut das Feldgerät 200' in den Schritten S450 und S451 beim Einschalten über die Basisstation 301 eine Verbindung mit der Vermittlungsstelleneinrichtung 303 auf und teilt dieser die zu einem Netzwerkmerkmal zugeordnete IP-Adresse mit. Wie ebenfalls bereits in Fig. 4 beschrieben, wird im Schritt S452 von dem APN festgestellt, ob das Feldgerät 200' in dem Netzwerk bekannt ist und ob es verbunden wird. Sobald festgestellt worden ist, dass das Feldgerät 200' bekannt und verbunden ist, überträgt im Schritt S501 der APN 303 die von ihm dem Feldgerät 200' zugeordnete IP-Adresse oder interne Adressinformation. Ebenso muss der APN 303 in dem Schritt S501, bevor eine Auswertung und Zuordnung der Merkmale zu Adressinformationen in dem Server stattfinden kann, ein zugehöriges Netzwerkmerkmal, z.B. eine IMEI oder eine ICCID mit übertragen. Diese Übertragung kann in demselben oder in unterschiedlichen Paketen übertragen werden. Die Übertragung kann auch auf unterschiedlichen Übertragungswegen erfolgen, beispielsweise kann die Adressinformation über ein paketvermitteltes Netz und das Netzwerkmerkmal über ein leitungsvermitteltet Netz übertragen werden, z.B. als CSD oder SMS. Im Schritt S502 übernimmt der Server 100 die interne Adressinformation des Feldgeräts 200' und trägt diese in die Datenbank 110 des zentralen Servers ein. Über das Netzwerkmerkmal, beispielsweise eine IMEI, die der APN ebenfalls zusammen mit der Adressinformation, beispielsweise einer IP-Adresse, an den Server überträgt, kann der Server 100 eine Zuordnung zu einem zuvor in der Datenbank 110 eingetragenen Feldgerätemerkmal machen, beispielsweise einer Seriennummer. Die Zuordnung von Netzwerkmerkmal und Feldgerätemerkmal findet dann über die Datenbank 110 statt. In der Datenbank 110 wird über das übertragene Netzwerkmerkmal, welches auch in der Datenbank hinterlegt sein muss, und dem Feldgerätemerkmal die Kopplung der Merkmale geschaffen. Ein Anwender hat dadurch die Möglichkeit, ohne Kenntnis des Netzwerkmerkmals oder der internen Adressinformation auf das Feldgerät zuzugreifen. Dazu muss der Anwender lediglich das Feldgerätemerkmal kennen. Somit ist im Wesentlichen unmittelbar nach dem Einschalten des Feldgeräts 200' die Verknüpfung eines Feldgerätemerkmals zu der zugehörigen internen Adressinformation oder IP-Adresse des Feldgeräts 200' über das Netzwerkmerkmal bekannt. Eine Abfrage und Ermittlung der Zuordnung der Adressinformation durch Abfrage des APNs zur Laufzeit, wie in den Schritten S403, S404, S405 beschrieben, kann somit vermieden werden. Wenn der Benutzer 402 im Schritt S400 seine Anfrage über die Abfrageeinrichtung 304' oder Anwendung 304' im Schritt S401 an den Server schickt, kann der Server sofort im Schritt S402' ermitteln, ob das Feldgerätmerkmal, beispielsweise die Seriennummer 1234, einem Gerät 200' zugeordnet ist.

Alternativ kann das Feldgerät 200, 200', 200", 200"' auch, nachdem ihm ein Netzwerkmerkmal und eine interne Adressinformation zugeteilt worden ist, auf den Server 100 zugreifen, indem es dem Server 100 ein Datenpaket über eine Paketverbindung, über eine SMS-Verbindung und/oder über eine CSD- Verbindung zuschickt und dem Server 100 im Wesentlichen zumindest eine Information aus einem Feldgerätemerkmal, einem Netzwerkmerkmal und einer internen Adressinformation übermittelt. Der Server speichert diese Information in der Datenbank 110 ab. In anderen Worten ist der zentrale Server 100 dafür verantwortlich, eine Kopplung zwischen Feldgerätemerkmal und interner Adresse zu schaffen. Das Koppelglied hierbei ist das Netzwerkmerkmal, welches der zentrale Server100 beispielsweise nach Erhalt einer Nachricht vom Feldgerät 200 zur Verfügung hat. Die Übertragung des Netzwerkmerkmal kann auf beliebigem Weg an den Server 100 gesendet werden, beispielsweise über CSD, SMS, http, etc.. Das Netzwerkmerkmal ist dem Feldgerät bekannt oder kann von diesem ermittelt werden. Die interne Adressinformation wird im Mobilfunkbereich dem Feldgerät 200, 200', 200", 200'" beim Aufbau einer Verbindung mitgeteilt, insbesondere Bei der Anmeldung an dem Netz über die Zugangsverbindung 111, 111', 111", 111"". Dadurch ist der APN für das Verteilen der Information nicht zwingend erforderlich. Bei dem Einsatz eines Verfahrens gemäß Fig. 5, ist es nicht nötig, dass die interne Adressinformation vom APN 303 an den zentralen Server 100 weitergereicht wird. In einem Beispiel kann das Feldgerät die Verteilung der benötigten Information übernehmen, ohne den APN 303 zu nutzen.

Außerdem kann in dem Schritt S402' die interne Adressinformation aus der Datenbank 110 abgefragt werden, mit der das Feldgerät 200' mit der Seriennummer 1234 im internen Netz erreichbar ist. Es wird sodann eine Anfrage im Schritt S407' mit einer zugehörigen Befehlsinformation 105 über den APN 303 und im Schritt S408' über die Basisstation 301 an das Feldgerät 200' weitergeleitet. Das Feldgerät 200' antwortet in dem Schritt S409' auf die Anfrage an den Server, der wiederum die Antwort an die anfragende Abfrageeinrichtung 304' in dem Schritt S410' weiterschickt, worauf der Benutzer 402 im Schritt S411' die Daten zur Verfügung hat.

Um ein Erreichen des Feldgeräts 200' mittels einer internen Adressinformation 106' über das interne Netz 107 zu gewährleisten, ist der APN 303 in einen Paketübertragungsmodus geschaltet. D. h. der APN 303 reagiert in den Schritten S407 bzw. S407' auf eine Anfrage mit einer Adressinformation, beispielsweise mit einer IP-Adresse, und vermittelt das interne Datenpaket 108 weiter zu dem Feldgerät. Über eine Konsolenverbindung, über die Befehle zwischen dem zentralen Server 100 und dem APN 303 ausgetauscht werden können, kann der Server 100 den APN in den Paketübertragungsmodus schalten bzw. den Paketübertragungsmodus abschalten. Schaltet der Server 100 den Paketübertragungsmodus des APN 303 ab, so vermittelt der APN 303 keine Datenpakete, sondern lediglich SMS- oder CSD-Informationen.

Das Netzwerkmerkmal oder eine Netzwerkkennung ist nicht zum Routen geeignet und wird in eine Adressinformation umgesetzt, die zum Routen im internen Datennetz 107 geeignet ist.

Das Netzwerkmerkmal erlaubt es ein Feldgerät im Netz zu identifizieren und das Feldgerät von anderen an der internen Datenschnittstelle 107 angeschlossenen Feldgeräten 200', 200", 200"' zu unterscheiden. Das Netzwerkmerkmal wird beispielsweise bei der Registrierung am Netz vom APN 303 an den Server mitgeteilt. Das Netzwerkmerkmal ist zunächst jedoch nur am APN bekannt. Wenn die Vermittlungsstelleneinrichtung 303 nicht eingerichtet ist, das Netzwerkmerkmal an den zentralen Server 100 weiterzugeben, kennt der Server 100 das Netzwerkmerkmal nicht. Diese Funktionalität der Weitergabe des Netzwerkmerkmals in der Vermittlungsstelleneinrichtung kann von dem Server 100 über eine Übertragungsmodusumschalteeinrichtung in der Vermittlungsstelleneinrichtung 303 eingeschaltet und ausgeschaltet werden.Für den Zugriff auf die Übertragungsmodusumschalteeinrichtung kann die Vermittlungsstelleneinrichtung 303 eine zugehörige Schnittstelle aufweisen.

Das Feldgerät kann ein ermitteltes Feldgerätemerkmal entweder über das Paketnetz 107, welches an dem APN angeschlossen ist, an den zentralen Server 100 übertragen oder auch über einen Alternativweg, beispielsweise über SMS oder auch über CSD, statt über das Paketnetz.

Ergänzend ist darauf hinzuweisen, dass "umfassend" und "aufweisend" keine anderen Elemente oder Schritte ausschließt und "eine" oder "ein" keine Vielzahl ausschließt. Ferner ist darauf hinzuweisen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messgerätezugangsvorrichtung (100), aufweisend:
eine externe Datenschnittstelle (101) zum Verbinden mit einem öffentlichen Netz (103);
eine interne Datenschnittstelle (102) zum Verbinden mit einem privaten Netz (107);
eine Datenbank (110);
eine Verwaltungseinrichtung (109);
eine Koppeleinrichtung (112);
wobei die externe Datenschnittstelle (101) eingerichtet ist, ein Datenpaket (104) zu empfangen, das Datenpaket im Wesentlichen einen Bereich mit einer Befehlsinformation (105) und einen Bereich mit einer URL (106) aufweist und aus dem empfangenen Datenpaket eine URL (106) und eine Befehlsinformation (105) zu extrahieren und die extrahierten Informationen (105, 106) an die Verwaltungseinrichtung (109) weiterzuleiten;
wobei die Verwaltungseinrichtung (109) eingerichtet ist, ein Feldgerätemerkmal einer an der internen Datenschnittstelle (102) angeschlossenen Feldgeräteeinrichtung (200, 200', 200", 200"') aus der externen Adressinformation (106) zu extrahieren;
wobei die Verwaltungseinrichtung (109) ferner eingerichtet ist, mittels einer Abfrage der Datenbank (110) zu prüfen, ob die Befehlsinformation (105) an die Feldgeräteeinrichtung (200, 200', 200", 200'") weitergeleitet werden soll, welche an der internen Datenschnittstelle (102) angeschlossen ist; und
wobei die Verwaltungseinrichtung (109) ferner eingerichtet ist, das Feldgerätemerkmal in eine interne Adressinformation (106') der Feldgeräteeinrichtung (200, 200', 200", 200'") zu übersetzen;
wobei das Feldgerätemerkmal eine feste Kennung der angeschlossenen Feldgeräteeinrichtung (200, 200', 200", 200'") ist, welche mit der Feldgeräteeinrichtung (200, 200', 200", 200"') verbunden ist und welche es erlaubt, die angeschlossene Feldgeräteeinrichtung (200, 200', 200", 200"') von anderen Feldgeräteeinrichtungen (200, 200', 200", 200"') zu unterscheiden;
wobei die interne Adressinformation (106') der Feldgeräteeinrichtung (200, 200', 200", 200"') eine Kennung für den Ort ist, an weichem sich die Feldgeräteeinrichtung (200, 200', 200", 200"') an der internen Datenschnittstelle (102) befindet und wobei die Kennung temporär vergeben ist;
wobei die Koppeleinrichtung (112) eingerichtet ist, die Befehlsinformation (105), die an die Feldgeräteeinrichtung (200, 200', 200", 200"') weitergeleitet werden soll, welche an der internen Datenschnittstelle (102) angeschlossen ist, über die interne Datenschnittstelle (102) mittels der internen Adressinformation (106') der Feldgeräteeinrichtung an die Feldgeräteeinrichtung (200, 200', 200", 200'") weiterzuleiten.

2. Messgerätezugangsvorrichtung (100) nach Anspruch 1, wobei das Feldgerätemerkmal ein Netzwerkmerkmal der Feldgeräteeinrichtung (200, 200', 200", 200"') ist;
wobei das Netzwerkmerkmal der Feldgeräteeinrichtung (200, 200', 200", 200"') eine Kennung ist, die es der internen Datenschnittstelle (102) erlaubt, die angeschlossene Feldgeräteeinrichtung (200, 200', 200", 200"') eindeutig an der internen Datenschnittstelle (102) zu identifizieren.

3. Messgerätezugangsvorrichtung (100) nach Anspruch 1 oder 2, wobei die Verwaltungseinrichtung (109) ferner eingerichtet ist, eine Verknüpfung eines Netzwerkmerkmals der Feldgeräteeinrichtung (200, 200', 200", 200'") mit der internen Adressinformation (106') der Feldgeräteeinrichtung (200, 200', 200", 200'") zu ermitteln, um das Feldgerätemerkmal in eine interne Adressinformation (106') der Feldgeräteeinrichtung (200, 200', 200", 200"') zu übersetzen;
wobei das Netzwerkmerkmal der Feldgeräteeinrichtung (200, 200', 200", 200'") eine Kennung ist, die es der internen Datenschnittstelle (102) erlaubt, die angeschlossene Feldgeräteeinrichtung (200, 200', 200", 200"') eindeutig an der internen Datenschnittstelle (102) zu identifizieren.

4. Messgerätezugangsvorrichtung (100) nach Anspruch 3, wobei die interne Datenschnittstelle (102) eine Vermittlungsstelleneinrichtung (303) aufweist;
wobei die Vermittlungsstelleneinrichtung (303) eingerichtet ist, eine Verknüpfung des Netzwerkmerkmals der Feldgeräteeinrichtung (200, 200', 200", 200'") mit der internen Adressinformation (106') der Feldgeräteeinrichtung (200, 200', 200", 200"') herzustellen.

5. Messgerätezugangsvorrichtung (100) nach einem der Ansprüche 1 bis 4, wobei die interne Datenschnittstelle (102) einen Port aufweist;
wobei die interne Adressinformation (106') der Feldgeräteeinrichtung (200, 200', 200", 200'") mit diesem Port an der internen Datenschnittstelle in Beziehung steht.

6. Messgerätezugangsvorrichtung (100) nach Anspruch 4 oder 5, wobei die die Vermittlungsstelleneinrichtung (303) eingerichtet ist, automatisch oder auf eine Anfrage die interne Adressinformation (106') der Feldgeräteeinrichtung und/oder das Netzwerkmerkmal der Feldgeräteeinrichtung (200, 200', 200", 200"') bereitzustellen.

7. Messgerätezugangsvorrichtung (100) nach einem der Ansprüche 1 bis 6, wobei die Befehlsinformation (105) zumindest eine Befehlsinformation ist, ausgewählt aus der Gruppe der Befehlsinformationen, bestehend aus:
einer Anfrage;
einem http Befehl, beispielsweise einem POST, einem GET oder einem REQUEST;
einem ping;
einem ftp, ssh und/oder einem telnet Befehl.

8. Messgerätezugangsvorrichtung (100) nach einem der Ansprüche 1 bis 7, wobei die Rechenleistung der Messgerätezugangsvorrichtung (100) leistungsfähiger ist, als die einer an der internen Datenschnittstelle (102) angeschlossenen Feldgeräteeinrichtung (200, 200', 200", 200"').

9. Messgerätezugangsvorrichtung (100) nach einem der Ansprüche 4 bis 8, wobei die Messgerätezugangsvorrichtung (100) eingerichtet ist, einen Paketübertragungsmodus der Vermittlungsstelleneinrichtung (303) anzuschalten und/oder auszuschalten.

10. Messgerätezugangsvorrichtung (100) nach einem der Ansprüche 1 bis 9, wobei das Feldgerätemerkmal mittels einer Mustererkennung aus der externen Adressinformation (106) extrahiert wird.

11. Verfahren zum Steuern des Zugangs zu einem Messgerät, aufweisend:
Empfangen (S201) eines Datenpakets über eine externe Datenschnittstelle, wobei das Datenpaket im Wesentlichen einen Bereich mit einer Befehlsinformation (105) und einen Bereich mit einer URL (106) aufweist;
Extrahieren (S202) einer URL (106) und einer Befehlsinformation aus dem empfangenen Datenpaket;
Extrahieren (S202) eines Feldgerätemerkmal einer an einer internen Datenschnittstelle angeschlossenen Feldgeräteeinrichtung aus der externen Adressinformation;
Prüfen (S203) mittels einer Abfrage einer Datenbank, ob die Befehlsinformation an die Feldgeräteeinrichtung weitergeleitet werden soll, welche an der internen Datenschnittstelle angeschlossen ist;
Übersetzen (S204) des Feldgerätemerkmals in eine interne Adressinformation der Feldgeräteeinrichtung;
Weiterleiten (S205) der Befehlsinformation, die an die Feldgeräteeinrichtung weitergeleitet werden soll, an die Feldgeräteeinrichtung welche an der internen Datenschnittstelle angeschlossen ist, über die interne Datenschnittstelle mittels der internen Adressinformation der Feldgeräteeinrichtung;
wobei das Feldgerätemerkmal eine feste Kennung der angeschlossenen Feldgeräteeinrichtung ist, welche mit der Feldgeräteeinrichtung verbunden ist und welche es erlaubt, die angeschlossene Feldgeräteeinrichtung von anderen Feldgeräteeinrichtungen zu unterscheiden;
wobei die interne Adressinformation der Feldgeräteeinrichtung eine Kennung für den Ort ist, an welchem sich die Feldgeräteeinrichtung an der internen Datenschnittstelle befindet und wobei die Kennung temporär vergeben ist.

12. Messgerätesystem (300), aufweisend:
eine Messgerätezugangsvorrichtung (100) nach einem der Ansprüche 1 bis 9;
eine Vermittlungsstelleneinrictung aufweisend:
eine Registriereinrichtung;
eine interne Datenschnittstelle (102) zum Verbinden mit einem privaten Netz;
eine Zugangsschnittstelle (302) zum Annehmen von einer Verbindungsanfrage von einer Feldgeräteeinrichtung;
eine Übertragungsmodusumschalteeinrichtung;
wobei die Registriereinrichtung eingerichtet ist, ein Netzwerkmerkmal von einer Feldgeräteeinrichtung entgegenzunehmen und eine Verknüpfung mit einer internen Adressinformation (106') herzustellen;
wobei die Übertragungsmodusumschalteeinrichtung eingerichtet ist, einen Umschaltbefehl zu erhalten und entsprechend dem Umschaltebefehl einen Paketübertragungsmodus einzuschalten und/oder auszuschalten; und mehrere Feldgeräte (200, 200', 200", 200"'), jeweils aufweisend:
eine Feldgerätemerkmalträgereinrichtung (201, 201', 201", 201'");
eine Netzwerkmerkmaiträgereinrichtung (204, 204',204", 204'");
eine Steuereinrichtung (205);
eine Kommunikationseinrichtung (206), zum Kommunizieren mit einem Datennetz (111, 107);
wobei die Steuereinrichtung (205) eingerichtet ist, wenn sie das Einschalten des Feldgeräts (200, 200', 200", 200'") erkennt, ein Netzwerkmerkmal aus der Netzwerkmerkmalträgereinrichtung (204, 204',204", 204"') auszulesen und über die Kommunikationseinrichtung (206) an eine Vermittlungsstelleneinrichtung (303) des Datennetzes weiterzuleiten.

## Claims

1. A measuring instrument access device (100), comprising:
an external data interface (101) for connecting with a public network (103);
an internal data interface (102) for connecting with a private network (107);
a database (110);
a management device (109);
a coupling device (112);
wherein the external data interface (102) is configured to receive a data packet (104), the data packet substantially comprising a region with a command information (105) and a region with a URL (106), and extract a URL (106) and a command information (105) from the received data packet, and to forward the extracted information (105, 106) to the management device (109);
wherein the management device (109) is configured to extract a field device feature of a field device (200, 200', 200", 200"') connected to the internal data interface (102) from the external addressing information (106);
wherein the management device (109) is further configured to check, by querying the database (110), whether the command information (105) should be forwarded to the field device (200, 200', 200", 200'") that is connected to the internal data interface (102); and
wherein the management device (109) is further configured to translate the field device feature into an internal addressing information (106') of the field device (200, 200', 200", 200'");
wherein the field device feature is a fixed identifier of the connected field device (200, 200', 200", 200"'), which is connected to the field device (200, 200', 200", 200"') and which enables the connected field device (200, 200', 200", 200'") to be distinguished from other field devices (200, 200', 200", 200'");
wherein the internal addressing information (106') of the field device (200, 200', 200", 200'") is an identifier for the location at which the field device (200, 200', 200", 200'") is located at the internal data interface (102), and wherein the identifier is temporarily assigned;
wherein the coupling device (112) is configured to forward the command information (105) that should be forwarded to the field device (200, 200', 200", 200'"), which is connected to the internal data interface (102), to the field device (200, 200', 200", 200'") via the internal data interface (102) by means of the internal addressing information (106') of the field device.

2. The measuring instrument access device (100) according to claim 1, wherein the field device feature is a network feature of the field device (200, 200', 200", 200'");
wherein the network feature of the field device (200, 200', 200", 200"') is an identifier that enables the internal data interface (102) to unambiguously identify the connected field device (200, 200', 200", 200"') at the internal data interface (102).

3. The measuring instrument access device (100) according to claim 1 or 2, wherein the management device (109) is further configured to ascertain a link of the network feature of the field device (200, 200', 200", 200'") with the internal addressing information (106') of the field device (200, 200', 200", 200"') in order to translate the field device feature into an internal addressing information (106') of the field device (200, 200', 200", 200'");
wherein the network feature of the field device (200, 200', 200", 200"') is an identifier that enables the internal data interface (102) to unambiguously identify the connected field device (200, 200', 200", 200'") at the internal data interface (102).

4. The measuring instrument access device (100) according to claim 3, wherein the internal data interface (102) comprises a switching center (303);
wherein the switching center (303) is configured to establish a link of the network feature of the field device (200, 200', 200", 200'") to the internal addressing information (106') of the field device (200, 200', 200", 200'").

5. The measuring instrument access device (100) according to any one of the claims 1 to 4, wherein the internal data interface (102) comprises a port;
wherein the internal addressing information (106') of the field device (200, 200', 200", 200'") is related to this port at the internal data interface.

6. The measuring instrument access device (100) according to claim 4 or 5, wherein the switching center (303) is configured to provide, automatically or upon request, the internal addressing information (106') of the field device and/or the network feature of the field device (200, 200', 200", 200'").

7. The measuring instrument access device (100) according to any one of the claims 1 to 6, wherein the command information (105) is at least one command information, selected from the group of command information, comprising:
a request;
an http command, for example a POST, a GET, or a REQUEST;
a ping;
an ftp, ssh and/or a telnet command.

8. The measuring instrument access device (100) according to any one of the claims 1 to 7, wherein the computing power of the measuring instrument access device (100) is more powerful than that of a field device (200, 200', 200", 200"') connected to the internal data interface (102).

9. The measuring instrument access device (100) according to any one of the claims 4 to 8, wherein the measuring instrument access device (100) is configured to switch a packet transmission mode of the switching center (303) on and/or off.

10. The measuring instrument access device (100) according to any one of the claims 1 to 9, wherein the field device feature is extracted from the external addressing information (106) by means of pattern recognition.

11. A method for controlling the access to a measuring instrument, comprising the steps of:
receiving (S201) a data packet via an external data interface, wherein the data packet substantially comprises a region with a command information (105) and a region with a URL (106),;
extracting (S202) a URL (106) and a command information from the received data packet;
extracting (S202) a field device feature of a field device connected to the internal data interface from the external addressing information;
checking (S203), by querying a database, whether the command information should be forwarded to the field device that is connected to the internal data interface;
translating (S204) the field device feature into an internal addressing information of the field device;
forwarding (S205) the command information, which should to be forwarded to the field device, to the field device that is connected to the internal data interface, via the internal data interface by means of the internal addressing information of the field device;
wherein the field device feature is a fixed identifier of the connected field device, which is connected with the field device and which enables the connected field device to be distinguished from other field devices;
wherein the internal addressing information of the field device is an identifier for the location at which the field device is located at the internal data interface, and wherein the identifier is temporarily assigned.

12. A measuring instrument system (300) comprising:
a measuring instrument access device (100) according to any one of the claims 1 to 9;
a switching center comprising:
a registration device;
an internal data interface (102) for connecting with a private network;
an access interface (302) for receiving a connection request from a field device;
a transmission mode switching device;
wherein the registration device is configured to receive a network feature from a field device and to establish a link to an internal addressing information (106');
wherein the transmission mode switching device is configured to receive a switching command and switch a packet transmission mode on and/or off in accordance with the switching command; and a plurality of field devices (200, 200', 200", 200'"), comprising respectively:
a field device feature carrier device (201, 201', 201", 201'");
a network feature carrier device (204, 204',204", 204'");
a controller (205);
a communication device (206) for communicating with a data network (111, 107);
wherein the controller (205) is configured to read, when the controller identifies the field device (200, 200', 200", 200"') being switched on, a network feature from the network feature carrier device (204, 204', 204", 204"') and to forward said network feature to a switching center (303) of the data network via the communication device (206).

## Revendications

1. Dispositif d'accès d'appareil de mesure (100), comportant :
une interface de données externe (101) pour une connexion à un réseau public (103),
une interface de données interne (102) pour une connexion à un réseau privé (107),
une base de données (110),
un dispositif de gestion (109),
un dispositif de couplage (112),
dans lequel l'interface de données externe (101) est adaptée pour recevoir un paquet de données, le paquet de données comportant principalement un champ contenant une information de commande (105) et un champ contenant une adresse URL (106) et pour extraire du paquet de données reçu une adresse URL (106) et une information de commande (105) et pour transférer les informations extraites (105, 106) au dispositif de gestion (109),
dans lequel le dispositif de gestion (109) est adapté pour extraire de l'information d'adressage externe (106) une caractéristique d'appareil de terrain d'un dispositif d'appareil de terrain (200, 200', 200", 200'") connecté à l'interface de données interne (102),
dans lequel le dispositif de gestion (109) est en outre adapté pour vérifier, en interrogeant la base de données (110), si l'information de commande (105) doit être transférée au dispositif d'appareil de terrain (200, 200', 200", 200'") qui est connecté à l'interface de données interne (102), et
dans lequel le dispositif de gestion (109) est en outre adapté pour traduire la caractéristique d'appareil de terrain en une information d'adressage interne (106') du dispositif d'appareil de terrain (200, 200', 200", 200'"),
dans lequel la caractéristique d'appareil de terrain est un identifiant fixe du dispositif d'appareil de terrain (200, 200', 200", 200'") connecté, qui est relié au dispositif d'appareil de terrain (200, 200', 200", 200'") et qui permet de différencier le dispositif d'appareil de terrain (200, 200', 200", 200"') connecté d'autres dispositifs d'appareils de terrain (200, 200', 200", 200'"),
dans lequel l'information d'adressage interne (106') du dispositif d'appareil de terrain (200, 200', 200", 200"') est un identifiant de l'emplacement où se trouve le dispositif d'appareil de terrain (200, 200', 200", 200"') sur l'interface de données interne (102) et dans lequel l'identifiant est attribué de manière temporaire,
dans lequel le dispositif de couplage (112) est adapté pour transférer au dispositif d'appareil de terrain (200, 200', 200", 200"') l'information de commande (105) qui doit être transférée au dispositif d'appareil de terrain (200, 200', 200", 200'"'), qui est connecté à l'interface de données interne (102), via l'interface de données interne (102) au moyen de l'information d'adressage interne (106') du dispositif d'appareil de terrain.

2. Dispositif d'accès d'appareil de mesure (100) selon la revendication 1, dans lequel la caractéristique d'appareil de terrain est une caractéristique de réseau du dispositif d'appareil de terrain (200, 200', 200", 200'"),
dans lequel la caractéristique de réseau du dispositif d'appareil de terrain (200, 200', 200", 200"') est un identifiant qui permet à l'interface de données interne (102) d'identifier de manière unique le dispositif d'appareil de terrain (200, 200', 200", 200'") connecté sur l'interface de données interne (102).

3. Dispositif d'accès d'appareil de mesure (100) selon la revendication 1 ou 2, dans lequel le dispositif de gestion (109) est en outre adapté pour déterminer un lien entre une caractéristique de réseau du dispositif d'appareil de terrain (200, 200', 200", 200"') et l'information d'adressage interne (106') du dispositif d'appareil de terrain (200, 200', 200", 200'"'), afin de traduire la caractéristique d'appareil de terrain en une information d'adressage interne (106') du dispositif d'appareil de terrain (200, 200', 200", 200'"),
dans lequel la caractéristique de réseau du dispositif d'appareil de terrain (200, 200', 200", 200"') est un identifiant qui permet à l'interface de données interne (102) d'identifier de manière unique le dispositif d'appareil de terrain (200, 200', 200", 200'") connecté sur l'interface de données interne (102).

4. Dispositif d'accès d'appareil de mesure (100) selon la revendication 3, dans lequel l'interface de données interne (102) comporte un dispositif central de commutation (303),
dans lequel le dispositif central de commutation (103) est adapté pour créer un lien entre la caractéristique de réseau du dispositif d'appareil de terrain (200, 200', 200", 200"') et l'information d'adressage interne (106') du dispositif d'appareil de terrain (200, 200', 200", 200'").

5. Dispositif d'accès d'appareil de mesure (100) selon l'une des revendications 1 à 4, dans lequel l'interface de données interne (102) comporte un port,
dans lequel l'information d'adressage interne (106') du dispositif d'appareil de terrain (200, 200', 200", 200"') est en lien avec ce port sur l'interface de données interne.

6. Dispositif d'accès d'appareil de mesure (100) selon la revendication 4 ou 5, dans lequel le dispositif central de commutation (303) est adapté pour fournir, de manière automatique ou sur demande, l'information d'adressage interne (106') du dispositif d'appareil de terrain et/ou la caractéristique de réseau du dispositif d'appareil de terrain (200, 200', 200", 200'").

7. Dispositif d'accès d'appareil de mesure (100) selon l'une des revendications 1 à 6, dans lequel l'information de commande (105) est au moins une information de commande choisie parmi le groupe d'informations de commandes constitué de :
une requête,
une commande http, par exemple une commande POST, GET ou REQUEST,
un ping,
une adresse ftp, ssh et/ou une commande telnet.

8. Dispositif d'accès d'appareil de mesure (100) selon l'une des revendications 1 à 7, dans lequel la puissance de calcul du dispositif d'accès d'appareil de mesure (100) est supérieure à celle d'un dispositif d'appareil de terrain (200, 200', 200", 200"') connecté à l'interface de données interne (102).

9. Dispositif d'accès d'appareil de mesure (100) selon l'une des revendications 4 à 8, dans lequel le dispositif d'accès d'appareil de mesure (100) est adapté pour activer et/ou désactiver un mode de transmission de paquets du dispositif central de commutation (303).

10. Dispositif d'accès d'appareil de mesure (100) selon l'une des revendications 1 à 9, dans lequel la caractéristique d'appareil de terrain est extraite de l'information d'adressage externe (106) au moyen d'une reconnaissance de forme.

11. Procédé pour commander l'accès à un appareil de mesure, comportant les étapes consistant à :
recevoir (S201) un paquet de données via une interface de données externe, le paquet de données comportant principalement un champ contenant une information de commande (105) et un champ contenant une adresse URL (106),
extraire (S202) une adresse URL (106) et une information de commande du paquet de données reçu,
extraire (S202) de l'information d'adressage externe une caractéristique d'appareil de terrain d'un dispositif d'appareil de terrain connecté à une interface de données interne,
vérifier (S203), en interrogeant une base de données, si l'information de commande doit être transférée vers le dispositif d'appareil de terrain qui est connecté à l'interface de données interne,
traduire (S204) la caractéristique d'appareil de terrain en une information d'adressage interne du dispositif d'appareil de terrain,
transférer (S205) l'information de commande qui doit être transférée vers le dispositif d'appareil de terrain, vers le dispositif d'appareil de terrain qui est connecté à l'interface de données interne, via l'interface de données interne au moyen de l'information d'adressage interne du dispositif d'appareil de terrain,
dans lequel la caractéristique d'appareil de terrain est un identifiant fixe du dispositif d'appareil de terrain connecté, qui est relié au dispositif d'appareil de terrain et qui permet de différencier le dispositif d'appareil de terrain connecté d'autres dispositifs d'appareils de terrain,
dans lequel l'information d'adressage interne du dispositif d'appareil de terrain est un identifiant de l'emplacement où se trouve le dispositif d'appareil de terrain sur l'interface de données interne et dans lequel l'identifiant est attribué de manière temporaire.

12. Système d'appareil de mesure (300) comportant :
un dispositif d'accès d'appareil de mesure (100) selon l'une des revendications 1 à 9,
un dispositif central de commutation comportant :
un dispositif d'enregistrement,
une interface de données interne (102) pour une connexion à un réseau privé,
une interface d'accès (302) pour recevoir une requête de connexion d'un dispositif d'appareil de terrain,
un dispositif de commutation de mode de transmission,
dans lequel le dispositif d'enregistrement est adapté pour recevoir une caractéristique de réseau d'un dispositif d'appareil de terrain et pour établir un lien avec une adresse d'information interne (106'),
dans lequel le dispositif de commutation de mode de transmission est adapté pour obtenir une commande de commutation et pour activer et/ou désactiver un mode de transmission de paquets en fonction de la commande de commutation ; et
plusieurs appareils de terrain (200, 200', 200", 200'"), comportant respectivement :
un dispositif porteur de caractéristiques d'appareil de terrain (201, 201', 201", 201"'),
un dispositif porteur de caractéristiques de réseau (204, 204', 204", 204"'),
un dispositif de commande (205),
un dispositif de communication (206) pour communiquer avec un réseau de données (111, 107),
dans lequel le dispositif de commande (205) est adapté pour, lorsqu'il détecte la mise en marche de l'appareil de terrain (200, 200', 200", 200'"'), lire une caractéristique de réseau à partir du dispositif porteur de caractéristiques de réseau (204, 204', 204", 204'") et la transférer à un dispositif central de commutation (303) du réseau de données via le dispositif de communication (206).
